(19) Europäisches Patentamt
European Patent Office
Office européen des brevets

(11) **EP 3 145 010 B1**

(12) **FASCICULE DE BREVET EUROPEEN**

(45) Date de publication et mention de la délivrance du brevet:
**13.06.2018 Bulletin 2018/24**

(51) Int Cl.:
*H01M 8/04298* (2016.01)  *H01M 8/0432* (2016.01)
*H01M 8/04537* (2016.01)  *H01M 8/04701* (2016.01)
*H01M 8/241* (2016.01)  *H01M 8/0267* (2016.01)
*H01M 8/0247* (2016.01)  *H01M 8/0265* (2016.01)
*H01M 8/0254* (2016.01)

(21) Numéro de dépôt: **16189558.6**

(22) Date de dépôt: **20.09.2016**

(54) **DÉTERMINATION D'UNE DISTRIBUTION SPATIALE D'UN PARAMÈTRE DE PRODUCTION ÉLECTRIQUE D'UNE CELLULE ÉLECTROCHIMIQUE**

BESTIMMUNG EINER RÄUMLICHEN VERTEILUNG EINES PARAMETERS DER STROMPRODUKTION EINER ELEKTROCHEMISCHEN ZELLE

DETERMINATION OF A SPATIAL DISTRIBUTION OF AN ELECTRICITY PRODUCTION PARAMETER OF AN ELECTROCHEMICAL CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2015 FR 1558895**

(43) Date de publication de la demande:
**22.03.2017 Bulletin 2017/12**

(73) Titulaire: **Commissariat à l'énergie atomique et aux énergies alternatives 75015 Paris (FR)**

(72) Inventeurs:
- **Nandjou Dongmeza, Fredy-Intelligent 38100 Grenoble (FR)**
- **Poirot-Crouvezier, Jean-Philippe 38450 Saint Georges de Commiers (FR)**
- **Micoud, Fabrice 38500 La Buisse (FR)**
- **Gerard, Mathias 38100 Grenoble (FR)**
- **Robin, Christophe 38000 Grenoble (FR)**
- **Jabbour, Lara 38000 Grenoble (FR)**
- **Vincent, Rémi 38000 Grenoble (FR)**

(74) Mandataire: **GIE Innovation Competence Group 310, avenue Berthelot 69372 Lyon Cedex 08 (FR)**

(56) Documents cités:
EP-A1- 2 924 793  WO-A1-2015/029983
FR-A1- 2 985 610  JP-A- 2005 293 902

- CHRISTOPHE ROBIN ET AL: "Development and experimental validation of a PEM fuel cell 2D-model to study heterogeneities effects along large-area cell surface", INTERNATIONAL JOURNAL OF HYDROGEN ENERGY., vol. 40, no. 32, 7 juillet 2015 (2015-07-07), pages 10211-10230, XP055237638, GB ISSN: 0360-3199, DOI: 10.1016/j.ijhydene.2015.05.178
- JABBOUR LARA ET AL: "Feasibility of in-plane GDL structuration: Impact on current density distribution in large-area Proton Exchange Membrane Fuel Cells", JOURNAL OF POWER SOURCES, vol. 299, 15 septembre 2015 (2015-09-15), pages 380-390, XP029297457, ISSN: 0378-7753, DOI: 10.1016/J.JPOWSOUR.2015.09.043
- STEFAN A FREUNBERGER ET AL: "Measuring the current distribution in PEFCs with sub-millimeter resolution", JOURNAL OF THE ELECTROCHEMICAL SOCIETY, PHILADELPHIA, US, US , vol. 153, no. 11 20 septembre 2006 (2006-09-20), pages A2158-A2165, XP002680728, DOI: 10.1149/1.2345591 Extrait de l'Internet: URL:http://jes.ecsdl.org/content/153/11/A2 158 [extrait le 2016-07-25]

**Description**

**DOMAINE TECHNIQUE**

Le domaine de l'invention est celui des réacteurs électrochimiques comportant un empilement de cellules électrochimiques, tels que les piles à combustible et les électrolyseurs, et plus précisément celui des procédés de détermination d'un paramètre représentatif de la production d'énergie électrique de la cellule électrochimique ainsi que celui des procédés de réalisation d'une plaque bipolaire de cellule électrochimique.

**ÉTAT DE LA TECHNIQUE ANTÉRIEURE**

Un réacteur électrochimique tel qu'une pile à combustible ou un électrolyseur comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène), par exemple contenu dans de l'air, est amené au contact de la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte éventuellement contenu dans une membrane polymère, et un conducteur électronique formé par le circuit électrique externe. L'empilement de cellules est ainsi le lieu de la réaction électrochimique : les réactifs doivent y être apportés, les produits et les espèces non réactives doivent en être évacués, tout comme la chaleur produite lors de la réaction.

Les cellules sont habituellement séparées les unes des autres par des plaques bipolaires qui assurent l'interconnexion électrique des cellules. Les plaques comportent un circuit de distribution du carburant formé sur une face anodique et un circuit de distribution du comburant formé sur une face cathodique opposée à la face anodique. Chaque circuit de distribution prend souvent la forme d'un réseau de canaux agencés par exemple en parallèle ou en serpentin, adaptés à amener l'espèce réactive de manière homogène à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite localement lors de la réaction par la cellule.

Le document FR2976732 illustre un exemple de cellule électrochimique réalisée de manière à obtenir un échauffement local homogène au sein de la cellule en fonctionnement. L'échauffement dépend de la densité de courant électrique en chaque point de la cellule qui est elle-même fonction de la pression partielle des espèces réactives. En effet, considérant ici le côté cathodique de la cellule, la quantité d'oxygène contenu dans le gaz circulant dans le circuit de distribution diminue progressivement à mesure que l'oxygène est consommé par la cellule, ce qui entraîne une variation spatiale de la densité de courant électrique produit par la cellule, et donc une variation spatiale de l'échauffement de la cellule. Pour éviter cette inhomogénéité spatiale de l'échauffement de la cellule, la conductivité électrique entre la plaque bipolaire amenant l'oxygène et la cellule est ajustée localement de manière à compenser la diminution de la pression partielle d'oxygène.

Cependant, il reste à améliorer encore l'homogénéisation de la distribution spatiale de la température effective de la cellule électrochimique, de manière à préserver la durée de vie de la cellule en limitant la cinétique des réactions de dégradations des différents éléments de la cellules et en réduisant les contraintes mécaniques d'origine thermique susceptibles de fragiliser la tenue mécanique des éléments de la cellule.

**EXPOSÉ DE L'INVENTION**

L'invention a pour objectif de remédier au moins en partie aux inconvénients de l'art antérieur, et plus particulièrement de proposer un procédé de détermination de la distribution spatiale d'un paramètre représentatif d'une production locale d'énergie électrique d'une cellule électrochimique permettant notamment d'homogénéiser la température locale de la cellule électrochimique en fonctionnement et ainsi de préserver la durée de vie de cette dernière.

L'invention propose à cet effet un procédé de détermination d'une distribution spatiale d'un paramètre d'intérêt représentatif de la production d'énergie électrique d'une cellule électrochimique, ladite cellule comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, comprenant les étapes suivantes :

i) fourniture d'une cellule électrochimique, au sein de laquelle le paramètre d'intérêt est réparti selon une distribution spatiale initiale, pour laquelle la distribution spatiale d'une température au sein de la cellule électrochimique en fonctionnement présente au moins une valeur locale supérieure ou égale à une valeur locale maximale prédéterminée ;

ii) définition d'une distribution spatiale d'une température de consigne au sein de la cellule en fonctionnement, telle que les valeurs locales de température sont inférieures à des valeurs locales maximales prédéterminées ;

iii) mesure d'une distribution spatiale d'une première grandeur thermique représentative de l'évacuation locale de la chaleur au sein de ladite cellule électrochimique en fonctionnement ;

iv) estimation d'une distribution spatiale d'une seconde grandeur thermique représentative de la production locale de chaleur au sein de ladite cellule électrochimique en fonctionnement, en fonction de ladite distribution spatiale de la température de consigne et de ladite distribution spatiale de la première grandeur thermique, de sorte que la distribution spatiale de température de ladite cellule électrochimique en fonctionnement, dont la première grandeur thermique présente ladite distribution spatiale mesurée et la seconde grandeur thermique présente ladite distribution spatiale estimée, soit sensiblement égale à celle de la température de consigne ;

v) détermination d'une distribution spatiale du paramètre d'intérêt en fonction de la distribution spatiale estimée de la seconde grandeur thermique,

et dans lequel l'étape d'estimation d'une distribution spatiale de la seconde grandeur thermique comporte

- une phase de réalisation d'un maillage d'un circuit de refroidissement d'au moins une plaque bipolaire de la cellule électrochimique dans lequel est destiné à s'écouler un fluide caloporteur;
- une phase de simulation numérique par ordinateur de la seconde grandeur thermique, sur ledit maillage, par résolution d'un modèle numérique discret exprimant la seconde grandeur thermique en fonction de la température locale et de la première grandeur thermique.

On obtient ainsi une distribution spatiale du paramètre d'intérêt, dont la prise en compte dans la cellule électrochimique considérée, permet à celle-ci, en fonctionnement, de présenter une distribution spatiale de température correspondant sensiblement à celle de la température de consigne. On évite ainsi que la cellule électrochimique en fonctionnement présente alors des zones dans lesquelles la température serait localement supérieure à des valeurs locales maximales prédéterminées.

La fourniture de la cellule électrochimique peut comporter une phase de réalisation expérimentale ou de modélisation numérique d'une cellule électrochimique, une phase de mesure de la distribution spatiale de la température au sein de la cellule électrochimique en fonctionnement, puis une phase de comparaison de la distribution spatiale mesurée de la température vis-à-vis d'une distribution spatiale prédéterminée d'une température maximale. Les valeurs locales de cette distribution spatiale de température maximale sont dites valeurs locales maximales prédéterminées. Lorsqu'au moins une valeur locale de la température mesurée est supérieure ou égale à une valeur locale maximale prédéterminée correspondante, c'est-à-dire pour la même position au sein de la distribution spatiale, la cellule électrochimique est alors fournie, c'est-à-dire considérée, pour les étapes suivantes du procédé de détermination.

La définition de la température de consigne peut être effectuée de sorte que les valeurs locales de température sont inférieures aux valeurs locales maximales correspondantes. La température de consigne peut présenter des valeurs locales sensiblement constantes, voire un gradient local de température sensiblement constant. Elle peut présenter des valeurs locales non constantes au sein de la distribution spatiale, qui restent inférieures à ces valeurs maximales prédéterminées. Elle peut également présenter un gradient local non constant au sein de la distribution spatiale, qui reste inférieur à des valeurs maximales prédéterminées.

La mesure de la distribution spatiale de la première grandeur thermique peut être une mesure expérimentale effectuée sur la cellule électrochimique considérée préalablement fabriquée, ou une mesure numérique effectuée sur un modèle numérique de la cellule électrochimique considérée. La première grandeur thermique peut être le débit local de fluide caloporteur parcourant un circuit de refroidissement d'une plaque bipolaire.

L'estimation de la distribution spatiale de la seconde grandeur thermique comporte :

- une phase de réalisation d'un maillage, par exemple bidimensionnel ou tridimensionnel, d'un circuit de refroidissement d'au moins une plaque bipolaire de la cellule électrochimique dans lequel est destiné à s'écouler un fluide caloporteur, et
- une phase de simulation numérique par ordinateur de la seconde grandeur thermique, sur ledit maillage, par résolution d'un modèle numérique discret exprimant la seconde grandeur thermique en fonction de la température locale et de la première grandeur thermique.

Dans ce cas, le modèle numérique prend en compte la distribution spatiale de la température de consigne et la distribution spatiale préalablement mesurée de la première grandeur thermique. Le modèle numérique discret, dit électrochimique, peut être une relation exprimant un paramètre représentatif de la production locale de chaleur, par exemple le flux local de chaleur, en fonction de la température locale et d'un paramètre représentatif de l'évacuation locale de chaleur, par exemple le débit local du fluide caloporteur.

Ainsi, la cellule électrochimique, dont la distribution spatiale du paramètre d'intérêt a été obtenue par le procédé de détermination, présente en fonctionnement une distribution spatiale de température sensiblement égale à celle de la température de consigne. On évite ainsi la génération de nouveaux points chauds ou nouvelles inhomogénéités de température, non voulus, qui pourraient apparaître si la distribution spatiale du paramètre d'intérêt était déterminée par une approche essentiellement thermique, c'est-à-dire sur la base d'une comparaison de la température réelle qui présente des points chauds ou inhomogénéités, et de la température de consigne.

De préférence, le paramètre d'intérêt est choisi parmi un paramètre représentatif de la résistance électrique de la cellule électrochimique ; un paramètre représentatif d'une résistance de contact entre au moins l'une des électrodes et la plaque bipolaire adjacente ; une charge d'un matériau catalyseur présent au moins dans l'une des électrodes ; et un paramètre représentatif d'une perméabilité d'au moins une électrode.

De préférence, les plaques bipolaires sont formées de deux tôles accolées l'une à l'autre, chaque tôle comportant des bossages formant au niveau d'une face dite externe un circuit de distribution d'une espèce réactive, les bossages des tôles formant ensemble, au niveau de faces dites internes opposées aux faces externes, un circuit de refroidissement comportant des canaux de refroidissement qui communiquent fluidiquement entre eux entre une entrée et une sortie du circuit de refroidissement. Les faces externes des tôles sont orientées vers une électrode de cellule électrochimique. Les canaux de refroidissement communiquent fluidiquement entre eux dans le sens où, entre l'entrée et la sortie du circuit de refroidissement, ils forment un réseau fluidique bidimensionnel, c'est-à-dire non linéaire.

De préférence, l'étape de détermination de la distribution spatiale du paramètre d'intérêt est effectuée en fonction, également, d'une valeur prédéterminée d'un paramètre représentatif de la puissance électrique globale de la cellule électrochimique. Le paramètre peut être la puissance électrique globale, à savoir le produit de la tension et de la densité de courant mesurées aux bornes de la cellule, voire le rendement de celle-ci, par exemple la tension de la cellule pour une densité de courant donnée. Il est alors possible de gérer à la fois la température locale au sein de la cellule électrochimique, dans le but d'en optimiser la durée de vie, tout en maintenant une puissance électrique voulue.

De préférence, le paramètre d'intérêt est un paramètre représentatif de la résistance électrique de la cellule électrochimique, la première grandeur thermique est une température locale effective mesurée au sein de la cellule en fonctionnement, et la seconde grandeur thermique est une grandeur représentative d'un écart local entre la température effective et la température de consigne.

De préférence, l'étape v) comporte :

- une sous-étape de calcul d'une distribution spatiale d'un coefficient correcteur à partir de la distribution spatiale de la seconde grandeur thermique ;
- une sous-étape dans laquelle on détermine la distribution spatiale du paramètre d'intérêt par corrélation de la distribution spatiale initiale du paramètre d'intérêt avec la distribution spatiale du coefficient correcteur.

Alternativement, l'étape v) peut comporter :

- une sous-étape dans laquelle on identifie au moins une zone de la cellule où la seconde grandeur thermique présente une valeur locale estimée supérieure à une valeur seuil prédéterminée ;
- une sous-étape dans laquelle on détermine la distribution spatiale du paramètre d'intérêt par modification de la distribution spatiale initiale dans la zone identifiée, en fonction de la valeur locale estimée de la seconde grandeur thermique dans cette zone.

Par ailleurs, le paramètre d'intérêt peut être un paramètre représentatif de la résistance électrique de la cellule électrochimique, la première grandeur thermique est alors représentative de l'évacuation locale de la chaleur produite par la cellule en fonctionnement, et la seconde grandeur thermique est alors représentative de la production locale de chaleur par la cellule en fonctionnement.

La première grandeur thermique peut être le débit local effectif mesuré d'un fluide caloporteur circulant dans un circuit de refroidissement d'une plaque bipolaire de la cellule, et la seconde grandeur thermique est le flux local de chaleur produite par la cellule en fonctionnement.

L'étape v) peut comporter :

- une première sous-étape dans laquelle on estime la distribution spatiale de la densité d'un signal électrique produit par la cellule en fonctionnement, à partir de la distribution spatiale estimée du flux de chaleur produite, et
- une deuxième sous-étape dans laquelle on détermine la distribution spatiale du paramètre d'intérêt à partir de la densité locale du signal électrique.

L'invention porte également sur un procédé de réalisation d'une plaque bipolaire de cellule électrochimique, comportant les étapes dans lesquelles :

- on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, la cellule présentant une résistance électrique répartie spatialement selon une distribution initiale ;
- on détermine, par le procédé de détermination selon l'une quelconque des caractéristiques précédentes, une distribution spatiale de la résistance électrique ;
- on réalise ladite plaque bipolaire de sorte que la résistance électrique présente la distribution spatiale déterminée.

Ladite plaque bipolaire étant formée de deux tôles embouties assemblées l'une à l'autre par une pluralité de points de soudure répartis selon une distribution spatiale initiale, l'étape de réalisation de la plaque bipolaire peut comporter la modification de la distribution spatiale d'un paramètre représentatif d'une résistance de contact entre les deux tôles en fonction de la distribution spatiale déterminée.

La modification de la distribution spatiale du paramètre représentatif de la résistance de contact peut comporter une modification de la répartition de points de soudure assurant l'assemblage des tôles l'une à l'autre en fonction de ladite distribution spatiale déterminée de la résistance électrique.

La modification de la distribution spatiale du paramètre représentatif de la résistance de contact peut comporter une disposition d'un revêtement présentant une conductivité électrique différente de celles des tôles dans des zones préalablement identifiées à partir de ladite distribution spatiale déterminée de la résistance électrique.

L'invention porte également sur un procédé de réalisation d'une cellule électrochimique comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, le procédé comportant les étapes suivantes :

- on considère une cellule électrochimique de référence présentant un paramètre d'intérêt représentatif de la production d'énergie électrique de la cellule réparti selon une distribution spatiale initiale ;
- on détermine, par le procédé de détermination selon l'une quelconque des caractéristiques précédentes, une distribution spatiale du paramètre d'intérêt ;
- on réalise la cellule électrochimique sur la base de la cellule électrochimique de référence dans laquelle le paramètre d'intérêt présente la distribution spatiale déterminée.

Par sur la base de, on entend que la cellule électrochimique réalisée présente les mêmes propriétés électrochimiques que celles de la cellule de référence, hormis le paramètre d'intérêt qui est réparti selon la distribution spatiale déterminée. La cellule électrochimique réalisée peut être la cellule de référence dans laquelle la distribution spatiale initiale du paramètre d'intérêt a été modifiée pour être sensiblement égale à la distribution spatiale déterminée.

L'invention porte également sur un support d'enregistrement, comportant des instructions pour la mise en oeuvre du procédé de détermination selon l'une quelconque des caractéristiques précédentes, ces instructions étant aptes à être exécutées par un processeur.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1a est une représentation schématique en coupe d'un exemple de cellule électrochimique, et la figure 1b est une représentation schématique illustrant la relation de corrélation entre la distribution spatiale de la production de chaleur et la distribution spatiale d'évacuation de chaleur dont résulte la distribution spatiale de température de la cellule électrochimique en fonctionnement ;

la figure 2 est un organigramme d'un procédé de détermination de la distribution spatiale de la résistance électrique de la cellule électrochimique selon un premier mode de réalisation ;

la figure 3 illustre des exemples de courbes de polarisation qui montrent l'évolution de la tension électrique de la cellule en fonction de la densité locale du courant électrique, pour différentes valeurs de la résistance électrique locale ;

la figure 4 est un organigramme d'un procédé de détermination de la distribution spatiale de la résistance électrique de la cellule électrochimique selon un deuxième mode de réalisation ;

la figure 5 est un exemple de maillage du circuit de refroidissement où chaque maille comporte un terme de production locale de chaleur $Q_{i,j}^{e}$, un terme d'évacuation locale de chaleur $D_{i,j}^{r}$, et une température $T_{i,j}^{c}$ ;

la figure 6a est une représentation schématique en perspective d'une partie de plaque bipolaire formée de deux tôles assemblées l'une à l'autre par un point de soudure; la figure 6b est une variante de la figure 6a où un produit de revêtement est situé entre les deux tôles; et la figure 6c est une représentation schématique en vue de dessus d'un circuit de refroidissement où des zones localement grisées illustrent des points de soudure ou la présence du produit de revêtement.

## EXPOSÉ DÉTAILLÉ DE MODES DE RÉALISATION PARTICULIERS

Sur les figures et dans la suite de la description, les mêmes références représentent des éléments identiques ou similaires. De plus, les différents éléments ne sont pas représentés à l'échelle, de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

On décrira différents modes de réalisation et variante en référence à une pile à combustible, et en particulier à une pile à hydrogène dont la cathode est alimentée en oxygène et l'anode en hydrogène. L'invention s'applique d'une manière générale à tout type de pile à combustible, en particulier à celles fonctionnant à basse température, c'est-à-dire à une température inférieure à 250°C, ainsi qu'aux électrolyseurs électrochimiques.

La figure la illustre de manière partielle et schématique un exemple de cellule électrochimique 1 appartenant à un empilement de cellules d'une pile à combustible. La cellule 1 comporte une anode 10 et une cathode 20 séparées l'une de l'autre par un électrolyte comprenant ici une membrane polymère 30, les électrodes 10, 20 étant disposées entre deux plaques bipolaires 40, 50 adaptées à amener des espèces réactives aux électrodes et à évacuer la chaleur produite lors de la réaction électrochimique.

Les plaques bipolaires comportent un circuit de distribution d'hydrogène 41 situé sur une face anodique et un circuit de distribution d'oxygène 51 situé sur une face cathodique. Elles sont ici formées de deux tôles métalliques 42a, 42b ; 52a, 52b, assemblées l'une à l'autre par des zones ou points de soudure, et sont embouties de manière à former les circuits de distribution. L'agencement des bossages permet de réaliser également un circuit de refroidissement 43, 53 à l'intérieur des plaques assurant l'écoulement d'un fluide caloporteur sans que celui-ci ne vienne au contact des électrodes. D'autres technologies de plaque bipolaire peuvent être utilisées, par exemple les plaques réalisées en matériau composite chargé par exemple de graphite, dont les bossages sont réalisés par moulage.

Chaque électrode 10, 20 comporte une couche de diffusion 11, 21 (GDL, pour *Gas Diffusion Layer,* en anglais) disposée au contact de l'une des plaques bipolaires 40, 50 et une couche active 12, 22 située entre la membrane 30 et la couche de diffusion 11, 21. Les couches de diffusion 11, 21 sont réalisées en matériau poreux permettant la diffusion des espèces réactives à partir du circuit de distribution des plaques bipolaires jusqu'aux couches actives, ainsi que la diffusion des produits issus de la réaction électrochimique jusqu'au même circuit de distribution. Les couches actives 12, 22 comportent des matériaux adaptés à permettre les réactions d'oxydation et de réduction aux interfaces respectives de l'anode et la cathode avec la membrane, par exemple un ionomère et un catalyseur.

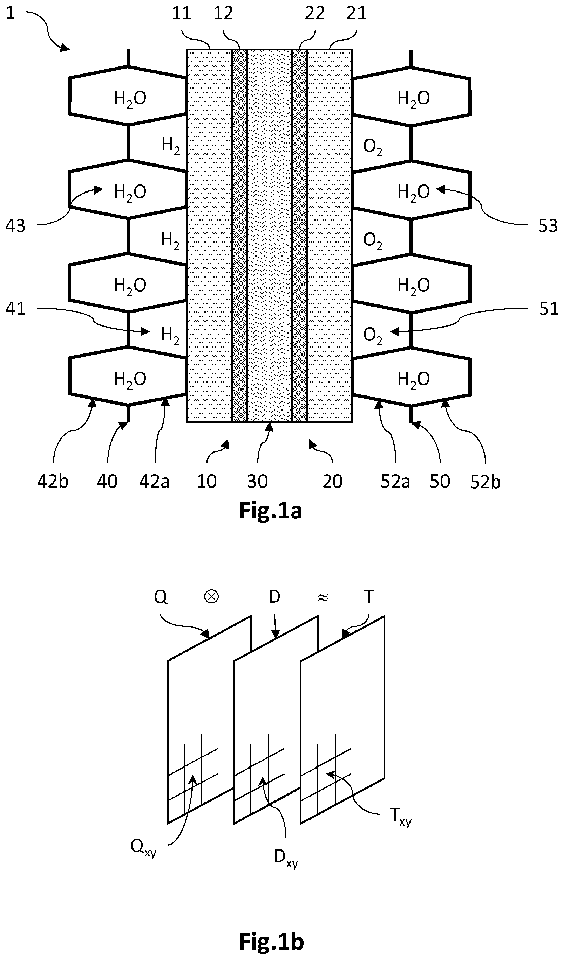

La figure 1b représente schématiquement la distribution spatiale de température T de la cellule électrochimique comme résultant d'une relation de corrélation entre la distribution spatiale d'un terme source de production de chaleur, autrement dit d'une grandeur représentative de la production de chaleur par la cellule tel que le flux de chaleur produite Q, et la distribution spatiale d'une grandeur représentative de l'évacuation de la chaleur produite, par exemple le débit massique D du fluide caloporteur dans le circuit de refroidissement.

Ainsi, contrairement à l'enseignement du document relatif à l'art antérieur cité précédemment, homogénéiser la distribution de production de chaleur Q et donc l'échauffement de la cellule ne peut suffire à obtenir l'homogénéisation de la distribution de température T de la cellule. En effet, il importe de tenir compte à la fois de la présence ou non d'inhomogénéités locales dans le terme Q de production de chaleur ainsi que de la présence ou non d'inhomogénéités locales dans le terme D d'évacuation de chaleur.

La production locale de chaleur, ou plus précisément le flux local de chaleur produite Q, est directement proportionnelle à la production locale d'énergie électrique, ou plus précisément à la densité locale de courant I, comme l'exprime la relation entre les distributions spatiales respectives :

$$Q_{x,y} = I_{x,y} \left( \Delta H/2F - U_{x,y} \right) \qquad (1)$$

où ΔH est l'enthalpie de la réaction électrochimique, F la constante de Faraday, et $U_{x,y}$ la distribution spatiale de la tension locale de la cellule, l'enthalpie et la tension pouvant être considérées comme quasiment homogènes en tout point de la cellule. Ainsi, la production de chaleur est impactée par toute inhomogénéité qui provient de paramètres fluidiques (dimensionnement des circuits de distribution des espèces réactives...), électrochimiques (propriétés locales des électrodes et de la membrane...), mais également électriques (résistances électriques des différents éléments de la cellule, par exemple résistivités des matériaux et résistances de contact entre les éléments de la cellule...), qui tous influent sur la distribution de densité de courant.

L'évacuation de chaleur par l'écoulement du fluide caloporteur peut également présenter des inhomogénéités locales qui proviennent notamment de pertes de charge singulières dans le circuit de refroidissement. Ces pertes de charge sont issues du dimensionnement du circuit de refroidissement lors de la réalisation des plaques bipolaires, et peuvent se traduire par la formation de zones à fort débit ou à faible débit au sein du circuit de refroidissement.

Dans le cadre de l'invention, on cherche à adapter la distribution spatiale d'un paramètre d'intérêt représentatif de la production d'énergie électrique, et donc d'énergie thermique, pour que la distribution spatiale de la température de la cellule en fonctionnement corresponde à celle d'une température de consigne, en tenant compte de la distribution spatiale de l'évacuation de chaleur que présente la cellule électrochimique.

Ainsi, la cellule électrochimique dont le paramètre d'intérêt serait réparti spatialement selon la distribution ainsi déterminée présenterait une température effective, ou température lors du fonctionnement de la cellule, sensiblement identique à la température de consigne. Cette température de consigne présente avantageusement une distribution spatiale sensiblement homogène, en scalaire ou en gradient. Par homogène en scalaire, on entend que la valeur locale de la température est sensiblement constante. Par homogène en gradient, on entend que le gradient local de température est sensiblement constant. Les valeurs locales de température peuvent cependant être non constantes tout en restant inférieures à des valeurs locales maximales prédéterminées. La cellule ne présente alors pas de zones de sur-température, ou points chauds, qui d'une part peuvent augmenter la cinétique des réactions de dégradation des éléments de la cellule et d'autre part peuvent générer des contraintes mécaniques susceptibles de dégrader la tenue mécanique des éléments de la cellule. La durée de vie de la cellule électrochimique est alors préservée. Par point chaud, on entend par exemple une zone de la cellule qui prend un pic de température ou un pic de gradient de température. Plus précisément, un point chaud peut être une zone où l'écart entre la température locale et la température d'entrée du circuit de refroidissement est supérieur au produit d'un coefficient et de l'écart de température entre l'entrée et la sortie du circuit de refroidissement, le coefficient pouvant être de l'ordre de 1.2 à 3 voire davantage, et est de préférence de l'ordre de 1.5. A titre d'exemple, pour une température de 77°C à l'entrée du circuit de refroidissement et de 80°C à la sortie du circuit, et pour un coefficient égal à 1.5, un point chaud est une zone de la cellule où la température locale excède 81.5°C.

Par distribution spatiale d'un paramètre, on entend la valeur locale de ce paramètre en tout point de la cellule, ou plus précisément, en tout point (x,y) d'un plan parallèle à la cellule, au niveau de la zone dite active correspondant à l'étendue surfacique des couches actives des électrodes.

Par température de la cellule, on entend la température de l'un ou l'autre des éléments de la cellule, par exemple la température de l'une des plaques bipolaires voire de l'une des électrodes. La température de la cellule peut ainsi correspondre localement à la température du fluide caloporteur dans le circuit de refroidissement.

Par paramètre représentatif de la production d'énergie électrique, on entend un paramètre dont la valeur influe localement sur la densité de courant $I_{x,y}$. Il peut s'agir de la résistance électrique R de la cellule qui dépend notamment de la résistivité des différents éléments de la cellule (plaques bipolaires, couches de diffusion, couches actives, membrane) et de la résistance électrique de contact entre chacun de ces éléments, en particulier entre les deux tôles de la plaque bipolaire et entre la plaque bipolaire et l'électrode. Il peut également s'agir de la charge $C_{x,y}$ (ou taux de charge, ou masse surfacique) en catalyseur de la couche active dans la mesure où elle influe directement sur la densité locale de courant $I_{x,y}$, ou encore de la perméabilité k de la couche de diffusion des électrodes qui détermine la quantité d'espèce réactive susceptible de diffuser localement jusqu'à la couche active.

Enfin, par paramètre représentatif de l'évacuation de chaleur, on entend un paramètre dont la valeur traduit la capacité de la cellule à évacuer localement la chaleur produite. Il peut s'agir en particulier du débit local, massique ou volumique, du fluide caloporteur circulant dans le circuit de refroidissement.

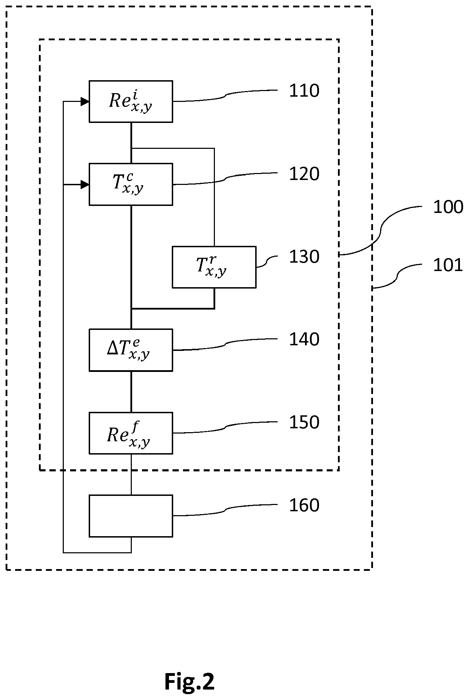

La figure 2 est un organigramme d'un procédé de détermination de la distribution spatiale d'un paramètre d'intérêt représentatif de la production d'énergie électrique, selon un premier mode de réalisation. Dans cet exemple, le paramètre d'intérêt est représentatif de la résistance électrique R de la cellule électrochimique, et correspond ici à la résistance électrique R, dont la valeur influe directement sur la densité locale de courant électrique $I_{x,y}$ localement produit lors de la réaction électrochimique et donc sur le flux local de chaleur produite $Q_{x,y}$.

D'une manière générale, selon ce premier mode de réalisation, on détermine une distribution spatiale optimisée $R_{x,y}^{f}$ de la résistance électrique R à partir de l'estimation de la distribution spatiale $\Delta T^{e}_{x,y}$ d'un écart $\Delta T^{e}$ entre une température effective $T^{r}$ de la cellule en fonctionnement pour une résistance électrique répartie selon une distribution initiale donnée, et une température de consigne $T^{c}$ prédéterminée. On est alors en mesure de modifier la résistance électrique initiale $R^{i}_{x,y}$ de la cellule pour qu'elle présente la distribution optimisée $R^{f}_{x,y}$, de manière à ce que la température effective $T^{r}$ de la cellule modifiée soit sensiblement égale à la température de consigne $T^{c}$.

La résistance électrique R de la cellule correspond ici à la somme des résistances des différents éléments de la cellule, à savoir principalement la résistance $R_{GDL,a}$ et $R_{GDL,c}$ des couches de diffusion anodique et cathodique, la résistance $R_{m}$ de la membrane, la résistance $R_{PB}$ d'une plaque bipolaire, ainsi que la résistance de contact $Rc_{GDL/BP}$ entre la couche de diffusion et la plaque bipolaire et la résistance de contact $Rc_{PB}$ entre les deux tôles métalliques de la plaque bipolaire. Elle peut être préalablement estimée ou mesurée localement sur des échantillons de cellule.

Lors d'une première étape 110, on définit une cellule électrochimique de référence au sein de laquelle la résistance électrique R de la cellule est répartie spatialement selon une distribution initiale $R^{i}_{x,y}$. La cellule présente une structure identique ou similaire à celle décrite en référence à la figure 1. La distribution spatiale initiale $R^{i}_{x,y}$ de la résistance électrique peut être sensiblement homogène, c'est-à-dire ici qu'elle présente une valeur sensiblement constante en tout point de la zone active. A titre d'exemple, on considère que les résistances des différents éléments de la cellule sont sensiblement constantes en tout point de la zone active, et que les points de soudure susceptibles de modifier localement la résistance de contact des plaques bipolaires sont répartis de manière sensiblement homogène au sein de la cellule.

Lors d'une étape 120, on définit une distribution spatiale $T^{c}_{x,y}$ d'une température de consigne $T^{c}$ de la cellule de référence lorsque celle-ci est en fonctionnement et produit une densité totale de courant $I_{tot}$ pour une tension $U_{tot}$ donnée. Au premier ordre, la température de consigne $T^{c}$ de la cellule peut correspondre à une température du fluide caloporteur au sein du circuit de refroidissement, la distribution de cette température dépendant alors notamment des valeurs en entrée $T^{c}$ et en sortie $T^{c}_{s}$ du circuit de refroidissement. A titre illustratif, la température d'entrée peut être fixée préalablement, par exemple à 75°C, et la température de sortie peut être estimée à partir de la puissance thermique $P_{th}$ à évacuer qui peut être évaluée par la relation $P_{th} = I_{tot} (\Delta H/2F - U_{tot})$. L'estimation de la température de sortie $T^{c}_{s}$ est ensuite obtenue par corrélation de la puissance thermique $P_{th}$ estimée précédemment, avec le débit total moyen $<D_{tot}>$ du liquide caloporteur dans le circuit de refroidissement, moyennant la capacité thermique $c_{p}$ du fluide caloporteur. On peut ensuite définir la distribution spatiale $T^{c}_{x,y}$ de la température de consigne $T^{c}$ à partir des valeurs de température du fluide caloporteur en entrée $T^{c}_{e}$ et en sortie $T^{c}_{s}$ du circuit de refroidissement, la distribution $T^{c}_{x,y}$ étant avantageusement homogène en gradient, c'est-à-dire que le gradient local de température de consigne est sensiblement constant.

Lors d'une étape 130, on obtient une distribution spatiale $T^{r}_{x,y}$ d'une première grandeur thermique représentative de la température de la cellule en fonctionnement. La première grandeur thermique est ici la température effective $T^{r}$ de la cellule électrochimique lorsqu'elle est en fonctionnement dans les mêmes conditions opératoires que celles considérées dans l'étape 120. Cette distribution $T^{r}_{x,y}$ n'est pas estimée, mais est issue d'une mesure par des moyens expérimentaux ou numériques. Elle peut ainsi être obtenue par mesure expérimentale au sein d'une cellule électrochimique présentant les mêmes propriétés que la cellule de référence définie lors de l'étape 110, par exemple au moyen d'une carte S++ commercialisée par la société « S++ Simulation Services » comportant une plaque invasive insérée entre deux plaques bipolaires et adaptée à mesurer une distribution spatiale de température. La distribution $T^{r}_{x,y}$ de température effective peut également être obtenue par simulation numérique à partir d'un modèle électrochimique de cellule, par exemple celui décrit dans la publication d'Inoue et al., Numerical analysis of relative humidity distribution in polymer electrolyte fuel cell stack including cooling water, J. Power Sources 162 (2006) 81-93.

La distribution $T^{r}_{x,y}$ de la température effective $T^{r}$ obtenue par mesure expérimentale ou numérique prend ainsi en compte les inhomogénéités locales du flux de chaleur produite qui dépend de la densité locale de courant, ainsi que celles de l'évacuation de chaleur qui dépend notamment du débit local du fluide caloporteur dans le circuit de refroidissement.

Lors d'une étape 140, on estime la distribution spatiale d'une seconde grandeur thermique, ici une grandeur $\Delta T^e$ représentative d'un écart local entre la température effective $T^r$ et la température de consigne $T^c$. L'estimation de cette grandeur d'écart local $\Delta T^e$ est calculée à partir de la distribution spatiale $T^c_{x,y}$ de la température de consigne $T^c$ définie lors de l'étape 120 et de la distribution spatiale $T^r_{x,y}$ de la température effective $T^r$ mesurée lors de l'étape 130. Il peut s'agir de la différence entre la valeur locale de la température effective et celle de la température de consigne, ou d'un rapport entre ces valeurs, ou autre. On considère ici la différence termes à termes entre les distributions de la température effective et de la température de consigne : $\Delta T^e_{x,y} = T^r_{x,y} - T^c_{x,y}$.

Lors d'une étape 150, on détermine ensuite la distribution spatiale $R^f_{x,y}$ du paramètre d'intérêt R en fonction de la distribution spatiale $\Delta T^e_{x,y}$ de l'écart local $\Delta T^e$.

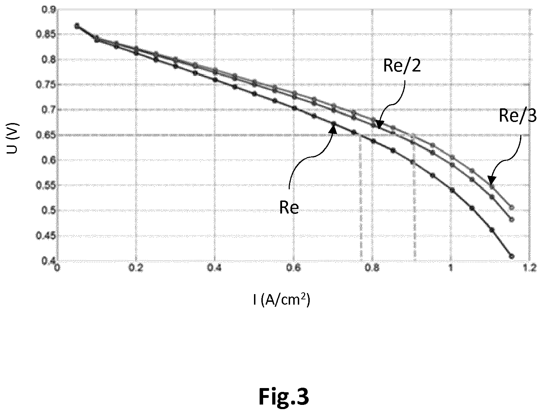

Selon une première variante, on calcule tout d'abord un coefficient correcteur dont la distribution spatiale est proportionnelle termes à termes à celle $\Delta T^e_{x,y}$ de l'écart local $\Delta T^e$. A titre d'exemple, le coefficient correcteur varie continûment entre une valeur minimale, par exemple inférieure ou égale à l'unité, jusqu'à une valeur maximale, à mesure que l'écart local varie respectivement entre une valeur sensiblement nulle à une valeur maximale. En référence à la figure 3, la valeur maximale du coefficient correcteur peut être déterminée à partir de courbes de polarisation relatives à la cellule de référence pour différentes valeurs locales de la résistance électrique. Dans cet exemple de courbes de polarisation issue d'un modèle électrochimique de cellule validé expérimentalement, la densité locale de courant I diminue de 0,93A/m$^2$ à 0,77A/m$^2$ en multipliant la résistance électrique de la cellule par 3, pour une tension de cellule U égale à 0,65V. Cette diminution de 17% de la densité locale de courant conduit à une diminution sensiblement identique de la production locale de chaleur. On peut ensuite déterminer la distribution spatiale $R^f_{x,y}$ de la résistance électrique R par corrélation, par exemple une multiplication termes à termes, de la distribution spatiale initiale $R^i_{x,y}$ de la résistance électrique R avec la distribution spatiale du coefficient correcteur.

Selon une deuxième variante, on identifie tout d'abord au moins une zone Zi de la cellule dans laquelle l'écart $\Delta T^e$ présente une valeur supérieure à une valeur seuil prédéterminée, la valeur seuil étant par exemple représentative d'un point chaud. On détermine ensuite la distribution spatiale $R^f_{x,y}$ de la résistance électrique R par modification de la distribution spatiale initiale $R^i_{x,y}$ dans la zone $Z_i$ identifiée en fonction de la valeur locale de l'écart $\Delta T^e$ dans cette zone.

A titre d'exemple, la distribution spatiale initiale $R^i_{x,y}$ peut être localement modifiée à partir d'un coefficient correcteur dont la valeur est proportionnelle à celle de l'écart $\Delta T^e$ dans cette zone. Comme dans la première variante, le coefficient correcteur varie continûment entre une valeur minimale et une valeur maximale préalablement déterminées par des courbes de polarisation similaires ou identiques à celles de la figure 3.

On obtient ainsi une distribution spatiale $R^f_{x,y}$ de la résistance électrique R de la cellule électrochimique. On est alors en mesure de modifier la distribution initiale $R^i_{x,y}$ de la résistance électrique R de la cellule de référence pour qu'elle présente la nouvelle distribution déterminée lors de l'étape 150. La cellule ainsi optimisée présente alors, en fonctionnement, une température effective dont la distribution spatiale est sensiblement égale à celle de la température de consigne. Dans la mesure où la distribution de la température de consigne est avantageusement homogène, la cellule en fonctionnement présente une température effective dont la distribution est également sensiblement homogène, permettant ainsi de préserver la durée de vie de la cellule.

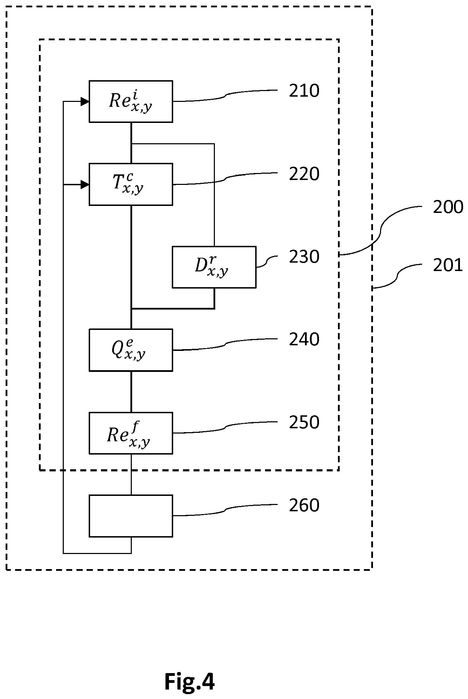

La figure 4 est un organigramme d'un procédé de détermination de la distribution spatiale d'un paramètre d'intérêt représentatif de la production d'énergie électrique, selon un deuxième mode de réalisation. Dans cet exemple, le paramètre d'intérêt est représentatif de la résistance électrique de la cellule électrochimique, dont la valeur influe directement sur la densité de courant électrique localement produit lors de la réaction électrochimique. Il correspond ici à la résistance électrique R de la cellule.

D'une manière générale, selon ce deuxième mode de réalisation, on détermine la distribution spatiale $R^f_{x,y}$ de la résistance électrique R à partir de l'estimation de la distribution spatiale de la production de chaleur nécessaire pour obtenir la distribution spatiale d'une température de consigne, en tenant compte de la distribution spatiale d'une grandeur thermique représentative de l'évacuation effective de chaleur dans la cellule. On est alors en mesure de modifier la résistance électrique R de la cellule pour qu'elle présente une distribution spatiale optimisée, de manière à ce que la température effective soit alors sensiblement égale à la température de consigne. La cellule électrochimique, dont le paramètre d'intérêt est spatialement réparti selon la distribution optimisée, présente en fonctionnement une température sensiblement égale à la température de consigne. Il n'y a pas de formations de nouveaux points chauds ou nouvelles inhomogénéités de température non voulus.

Cette approche, dite électrochimique, et non plus essentiellement thermique, est particulièrement avantageuse lorsqu'au moins une plaque bipolaire de la cellule électrochimique, voire les deux plaques bipolaires, sont formées de tôles accolées l'une à l'autre et présentant des bossages qui définissent un circuit de refroidissement bidimensionnel. Les bossages de chaque tôle, au niveau des faces, dites externes, des tôles, c'est-à-dire des faces orientées vers une électrode, définissent un circuit de distribution pour les espèces réactives. Au niveau des faces internes, c'est-à-dire des faces opposées aux faces externes, les bossages forment un circuit de refroidissement dans lequel est destiné à circuler un fluide caloporteur. Le circuit de refroidissement est dit linéaire lorsque les canaux de refroidissement ne communiquent pas entre eux, c'est-à-dire que le fluide caloporteur, entre l'entrée et la sortie du circuit de refroidissement, ne peut sensiblement pas passer d'un canal de refroidissement à un autre. Le circuit de refroidissement est dit bidimensionnel lorsque les canaux de refroidissement communiquent entre eux, de manière à former un réseau fluidique bidimensionnel et non pas linéaire. C'est le cas notamment lorsque les canaux de distribution d'une tôle ne sont pas parallèles à ceux de l'autre tôle.

Lors d'une première étape 210, on définit, ou fournit, une cellule électrochimique de référence au sein de laquelle la résistance électrique R de la cellule est répartie spatialement selon une distribution initiale $R^i_{x,y}$. La distribution spatiale initiale $R^i_{x,y}$ de la résistance électrique R peut être sensiblement homogène en scalaire, de sorte que la valeur locale est sensiblement constante en tout point de la zone active. La cellule présente une structure identique ou similaire à celle décrite en référence à la figure 1 et cette étape est similaire ou identique à l'étape 110 décrite précédemment. La cellule électrochimique considérée présente alors, en fonctionnement, une distribution spatiale de température dont au moins une valeur locale est supérieure ou égale à une valeur locale maximale prédéterminée. Cette dernière peut être constante ou différente en fonction du point considéré de la cellule électrochimique. Cette étape peut comporter :

- une phase de réalisation expérimentale ou de modélisation numérique d'une cellule électrochimique,
- une phase de mesure de la distribution spatiale de la température au sein de la cellule électrochimique en fonctionnement, puis
- une phase de comparaison de la distribution spatiale mesurée de la température vis-à-vis d'une distribution spatiale prédéterminée d'une température maximale. Les valeurs locales de cette distribution spatiale de température maximale sont dites valeurs locales maximales prédéterminées.

Lorsqu'au moins une valeur locale de la température mesurée est supérieure ou égale à une valeur locale maximale prédéterminée correspondante, c'est-à-dire pour la même position au sein de la distribution spatiale, la cellule électrochimique est alors fournie, c'est-à-dire considérée, pour les étapes suivantes du procédé de détermination.

Lors d'une étape 220, on définit une distribution spatiale $T^c_{x,y}$ d'une température de consigne $T^c$ de la cellule de référence lorsque celle-ci est en fonctionnement et produit une densité totale de courant $I_{tot}$ pour une tension $U_{tot}$ donnée. Cette étape est similaire ou identique à l'étape 120 décrite précédemment. Les valeurs locales de la distribution spatiale de la température de consigne sont inférieures à des valeurs locales maximales correspondantes.

De manière facultative, il est avantageux de préciser la distribution spatiale $T^c_{x,y}$ de la température de consigne $T^c$ en fonction de la distribution spatiale de la concentration en espèce réactive au niveau de la zone active entre l'entrée et la sortie du circuit de distribution correspondant. En effet, la consommation d'espèce réactive au sein de la surface active de la cellule conduit à une diminution progressive de la concentration d'espèce réactive le long du circuit de distribution. Cette diminution progressive se traduit par une diminution de la densité locale de courant produit par la cellule et donc de la production locale de chaleur, ce qui peut conduire à la formation d'inhomogénéités de la température de la cellule. Pour compenser cette diminution progressive de la production de chaleur, il est avantageux de définir une température de consigne qui tienne compte de la diminution de la concentration d'espèce réactive, de sorte que la température effective de la cellule en fonctionnement correspond à la température de consigne, celle-ci présentant avantageusement une distribution spatiale homogène. Pour cela, la distribution spatiale $\widetilde{T}^c_{x,y}$ de la température de consigne précisée $T^c$ peut s'écrire, par exemple :

$$\widetilde{T}^c_{x,y} = T^c_{x,y} + K^i . [\ max(c^i_{x,y}) - c^i_{x,y}\ ] \qquad (2)$$

où $c^i_{x,y}$ est la distribution spatiale de la concentration $c^i$ en espèce réactive i, par exemple en oxygène, et $K^i$ est une constante positive, par exemple proche de 1, qui peut ultérieurement être ajustée. La distribution spatiale $c^i_{x,y}$ de la concentration $c^i$ peut être estimée au premier ordre à partir du cheminement des canaux du circuit de distribution de l'espèce réactive considérée et en supposant une consommation homogène sur toute la zone active. Elle peut également être déterminée plus précisément par mesure expérimentale ou numérique de la distribution spatiale de la densité de courant dans une cellule similaire ou identique à la cellule de référence, qui permet de déduire celle de la concentration de l'espèce réactive. D'autres relations (2) peuvent convenir pour préciser la distribution spatiale de la température de consigne en tenant compte de l'évolution spatiale de la concentration en espèce réactive. On obtient ainsi une distribution spatiale $\widetilde{T}^c_{x,y}$ de la température de consigne $\widetilde{T}^c$ qui permet ainsi d'obtenir une distribution de la température effective de la cellule dont l'homogénéité est améliorée.

Par ailleurs, de manière facultative et éventuellement complémentaire à l'étape de précision de la température de consigne décrite précédemment, il est avantageux de préciser la distribution spatiale $T^c_{x,y}$ de la température de consigne $T^c$ en fonction de la distribution spatiale $\varphi_{x,y}$ de l'humidité relative $\varphi$ dans les circuits de distribution. L'humidité relative $\varphi$ est définie classiquement comme le rapport entre la pression partielle $P_{H2O}$ de la vapeur d'eau contenue localement dans le gaz circulant dans le circuit de distribution et la pression de vapeur saturante $P_{sat}$. L'humidité relative $\varphi$ a un effet sur la cinétique des réactions électrochimiques. Aussi, pour compenser la variation locale de l'humidité relative, il est avantageux de définir une température de consigne qui compense cette variation locale, par exemple l'engorgement ou l'assèchement local des circuits de distribution, de sorte que la température effective de la cellule en fonctionnement présente une distribution spatiale homogène. Pour cela, la distribution spatiale $\widetilde{T}'^c_{x,y}$ de la température de consigne précisée $\widetilde{T}'^c$ peut s'écrire, par exemple :

$$\widetilde{T}'^c_{x,y} = T^c_{x,y} + K^\varphi . [\ \varphi_{x,y} / \varphi_{in}\ ] \qquad (3)$$

où $\varphi_{x,y}$ est la distribution spatiale de l'humidité relative $\varphi$ dans le circuit de distribution, $\varphi_{in}$ est l'humidité relative en entrée du circuit de distribution, et $K^\varphi$ est une constante positive, par exemple proche de 1, qui peut ultérieurement être ajustée. La distribution $\varphi_{x,y}$ de l'humidité relative $\varphi$ peut être estimée au premier ordre à partir du cheminement des canaux du circuit de distribution considéré et en supposant une densité de courant homogène sur toute la zone active. Elle peut également être déterminée plus précisément par mesure expérimentale ou numérique de la distribution spatiale de la densité de courant dans une cellule similaire ou identique à la cellule de référence, qui permet de déduire celle de l'humidité relative. D'autres relations (3) peuvent convenir pour préciser la distribution spatiale de la température de consigne à partir de l'évolution spatiale de l'humidité relative On obtient ainsi une distribution spatiale $\widetilde{T}^c_{x,y}$ de la température de consigne $\widetilde{T}^c$ qui permet ainsi d'obtenir une distribution de la température effective de la cellule dont l'homogénéité est améliorée.

Lors d'une étape 230, on obtient une distribution spatiale $D^r_{x,y}$ d'une première grandeur thermique représentative de l'évacuation de la chaleur $D^r$ au sein de la cellule en fonctionnement. La première grandeur thermique est ici le débit massique $D^r$ de fluide caloporteur dans le circuit de refroidissement. Cette distribution $D^r_{x,y}$ n'est pas estimée, mais est issue d'une mesure par des moyens expérimentaux ou numériques. Elle peut ainsi être obtenue par mesure expérimentale au sein d'une cellule électrochimique présentant les mêmes propriétés que la cellule de référence définie lors de l'étape 210, par exemple au moyen d'une technique de type PIV (*Particle Image Velocimetry*, en anglais) ou de toute autre technique adaptée, réalisée dans un circuit de refroidissement présentant les mêmes caractéristiques dimensionnelles que celui de la cellule de référence. La distribution $D_{x,y}^r$ de débit massique $D^r$ peut également être obtenue par simulation numérique à partir d'un logiciel de simulation d'écoulement tel que, par exemple, FLUENT ou COMSOL.

Lors d'une étape 240, on estime la distribution spatiale $Q_{x,y}^e$ d'une seconde grandeur thermique $Q^e$ à partir de ladite distribution spatiale $T_{x,y}^c$ de la température de consigne $T^c$ définie lors de l'étape 220 et de ladite distribution spatiale $D_{x,y}^r$ du débit de fluide caloporteur $D^r$ obtenue lors de l'étape 230. La seconde grandeur thermique est représentative de la production locale de chaleur et correspond ici au flux local de chaleur $Q^e$ qu'évacue le fluide caloporteur $D^r$ pour obtenir la température de consigne $T^c$.

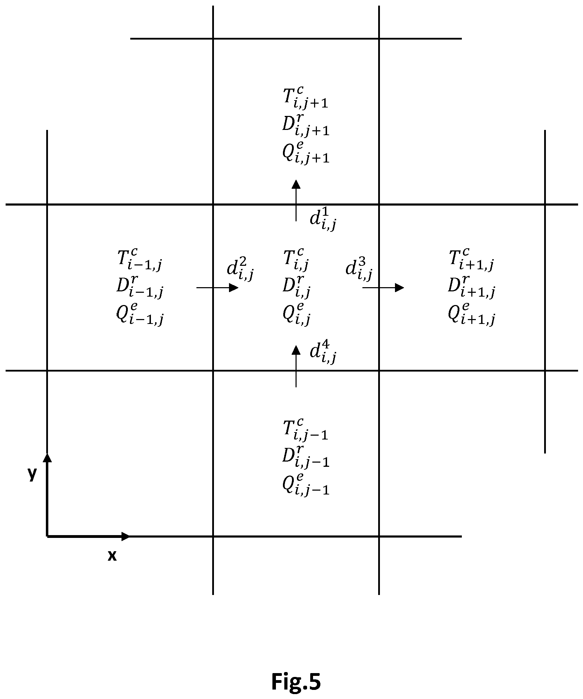

Pour cela, comme l'illustre la figure 5, on discrétise le circuit de refroidissement en un maillage bidimensionnel ou tridimensionnel, ici bidimensionnel, dont chaque maille est un volume élémentaire (i,j) traversé par le fluide caloporteur.

Ainsi, chaque maille (i,j) du circuit de distribution présente deux grandeurs connues : la température locale $T_{i,j}^c$ de consigne et le débit local $D_{i,j}^r$ de fluide caloporteur ; et une grandeur à déterminer : le flux local de chaleur produite $Q_{i,j}^e$. On calcule ensuite les échanges thermiques et fluidiques entre la maille considérée et les mailles adjacentes en déterminant d'une part les différences de température, et d'autre part les débits du fluide caloporteur au niveau des quatre facettes de la maille considérée. Ce calcul peut être effectué par simulation numérique par ordinateur, sur ledit maillage. Cela revient à résoudre un modèle numérique discret exprimant la seconde grandeur thermique, à savoir ici le flux local de chaleur, en fonction de la température locale et de la première grandeur thermique, à savoir ici le débit local du fluide caloporteur. Le modèle numérique, dit électrochimique, peut être exprimé par la relation (6).

Les différences de température au niveau des quatre facettes de la maille (i,j) peuvent être calculées de la manière suivante :

$$\delta T_{i,j}^1 = T_{i,j}^c - T_{i,j+1}^c \tag{4-1}$$

$$\delta T_{i,j}^2 = T_{i,j}^c - T_{i-1,j}^c \tag{4-2}$$

$$\delta T_{i,j}^3 = T_{i,j}^c - T_{i+1,j}^c \tag{4-3}$$

$$\delta T_{i,j}^4 = T_{i,j}^c - T_{i,j-1}^c \tag{4-4}$$

Les débits du fluide caloporteur au niveau des quatre facettes de la maille (i,j) peuvent être obtenus par projection du débit massique $D_{i,j}^r$ (ici une donnée vectorielle) sur les vecteurs $e_x$ et $e_y$ passant respectivement par les mailles (i-1,j), (i,j) et (i+1,j), et par les mailles (i,j-1), (i,j) et (i,j+1) :

$$d_{i,j}^1 = (D_{i,j}^r \cdot e_y + D_{i,j+1}^r \cdot e_y)/2 \tag{5-1}$$

$$d_{i,j}^2 = (D_{i,j}^r \cdot e_x + D_{i-1,j}^r \cdot e_x)/2 \tag{5-2}$$

$$d_{i,j}^3 = (D_{i,j}^r \cdot e_x + D_{i+1,j}^r \cdot e_x)/2 \tag{5-3}$$

$$d_{i,j}^4 = (D_{i,j}^r \cdot e_y + D_{i,j-1}^r \cdot e_y)/2 \tag{5-4}$$

Par convention, on considère que le débit local $d_{i,j}$ est positif lorsque le fluide entre dans la maille (i,j) et négatif lorsqu'il en sort.

On calcule enfin la distribution spatiale $Q^e_{x,y}$ du flux $Q^e$ de chaleur produit par la cellule à partir de la relation :

$$Q^e_{x,y} \approx Q^e_{i,j} = \sum_{k=1}^4 d^k_{i,j}.c_p.\delta T^k_{i,j} \qquad (6)$$

On obtient ainsi la distribution spatiale du flux de chaleur $Q^e$ que doit produire la cellule pour que la distribution de température effective corresponde à celle de la température de consigne, connaissant la distribution du débit massique effectif du fluide caloporteur dans le circuit de distribution.

Lors d'une étape 250, on détermine la distribution spatiale $R^f_{x,y}$ de la résistance électrique R en fonction de la distribution spatiale $Q^e_{x,y}$ du flux de chaleur produite $Q^e$. Pour cela, on peut estimer tout d'abord la distribution spatiale de la densité d'un signal électrique produit par la cellule en fonctionnement, par exemple la densité de courant $I^e$, à partir de la distribution spatiale $Q^e_{x,y}$ estimée du flux de chaleur produite $Q^e$. Dans la mesure où le flux de chaleur produite $Q^e$ est approximativement proportionnel à la densité de courant $I^e$, celle-ci peut être déterminée à partir de la relation :

$$I^e_{x,y} = Q^e_{x,y}.\frac{I_{tot}}{Q_{tot}} \qquad (7)$$

où $I_{tot}$ est la densité de courant totale délivrée par la cellule électrochimique en fonctionnement, et $Q_{tot}$ est le flux de chaleur produite totale obtenue par intégrale de la distribution spatiale $Q^e_{x,y}$ sur toute la surface active.

Ensuite, on détermine la nouvelle distribution spatiale $R^f_{x,y}$ de la résistance électrique R à partir de la densité locale du courant électrique $I^e_{x,y}$. Pour cela, une approche consiste à déterminer les valeurs minimale $R_{min}$ et maximale $R_{max}$ de la résistance électrique de la cellule au niveau de la zone active. Il peut s'agir d'une mesure expérimentale sur un échantillon de cellule présentant les mêmes propriétés que celles de la cellule de référence, ou d'une mesure par simulation numérique, par exemple à l'aide du logiciel COMSOL Multiphysics®. On calcule ensuite la distribution spatiale $R^f_{x,y}$ par exemple à partir de la relation :

$$R^f_{x,y} = \min\left(R_{max}, R_{min}\frac{I^e_{max}}{I^e_{x,y}}\right) \qquad (8)$$

où $I^e_{max}$ est la valeur maximale de la densité locale de courant $I^e_{x,y}$. La résistance électrique locale varie ainsi linéairement entre les valeurs minimale $R_{min}$ et maximale $R_{max}$ en fonction de la valeur locale de la densité de courant $I^e$. Bien entendu, toute autre loi, par exemple polynomiale, exponentielle ou logarithmique, faisant varier la résistance électrique locale de sorte que la valeur minimale $R_{min}$ corresponde à une densité locale de courant maximale et inversement, peut convenir. Les valeurs minimale $R_{min}$ et maximale $R_{max}$ peuvent être prédéterminées en fonction de la puissance électrique globale UI voulue de la cellule électrochimique, où U est la tension électrique et I la densité de courant électrique mesurées aux bornes de la cellule.

On a ainsi déterminé la distribution spatiale $R^f_{x,y}$ de la résistance électrique R qui tienne compte de la distribution de production d'énergie électrique $I^e$ et donc thermique $Q^e$ qu'il faudrait pour que la température effective de la cellule en fonctionnement corresponde à la température de consigne $T^c$, en considérant l'évacuation effective $D^r$ de la chaleur par le circuit de refroidissement. Dans la mesure où la température de consigne est avantageusement homogène spatialement, une cellule dont la résistance électrique R est répartie suivant la distribution spatiale $R^f_{x,y}$ présente, lorsqu'elle

est en fonctionnement au point de polarisation $U_{tot}$ et $I_{tot}$, une température effective dont l'homogénéité de la distribution spatiale est optimisée.

Un procédé de réalisation d'une plaque bipolaire de la cellule électrochimique est maintenant décrit. On considère une cellule électrochimique identique ou similaire à la cellule de référence définie lors des étapes 110 et 210. Elle comporte deux électrodes séparées l'une de l'autre par un électrolyte et disposées entre deux plaques bipolaires adaptées à amener des espèces réactives aux électrodes et à évacuer de la chaleur produite par la cellule en fonctionnement, la cellule présentant une résistance électrique R répartie spatialement selon une distribution initiale $R_{x,y}^{i}$. On détermine, par le procédé décrit précédemment en référence aux figures 2 et 4, une distribution spatiale $R_{x,y}^{f}$ de la résistance électrique R de la cellule électrochimique. On réalise ensuite, lors d'une étape 160 (figure 2) ou 260 (figure 4), la plaque bipolaire de sorte que la résistance électrique R présente la distribution spatiale $R_{x,y}^{f}$ déterminée.

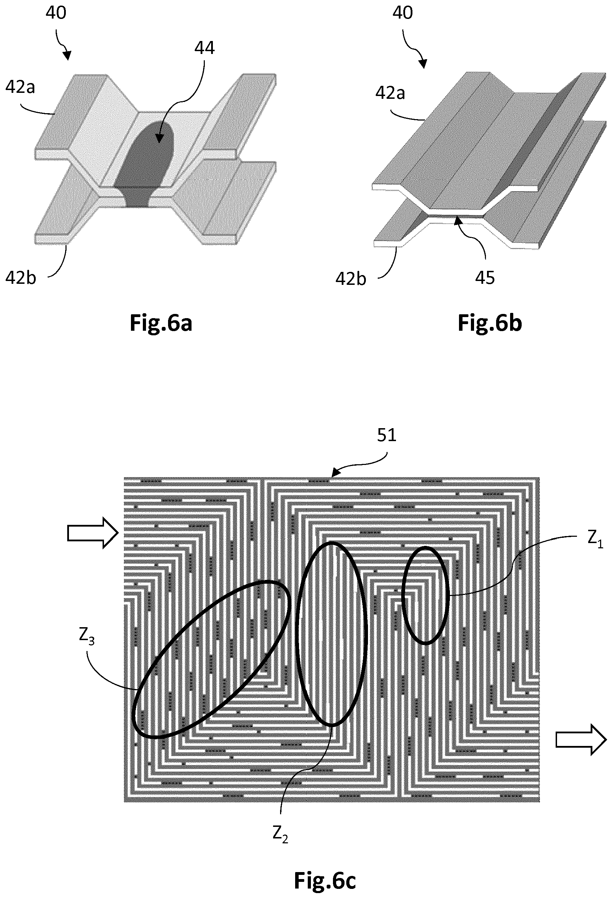

Selon un mode de réalisation, l'une et/ou l'autre des plaques bipolaires est formée de deux tôles présentant des bossages obtenus par emboutissage ou moulage, assemblées l'une à l'autre. Il est possible de modifier la résistance de contact entre les deux tôles par la présence ou non de points de soudure (figure 6a) et/ou par la présence d'un revêtement disposé localement entre les deux tôles (figure 6b) de manière à ce que la résistance électrique R présente la distribution spatiale $R_{x,y}^{f}$ déterminée précédemment.

Comme l'illustre la figure 6a, les deux tôles 42a, 42b, ici métalliques, peuvent être assemblées l'une à l'autre par une pluralité de points, ou zones, de soudure 44 répartis selon une distribution spatiale initiale. La dimension des points de soudure 44 ainsi que leur densité modifient localement la résistance de contact $R_{PB}$ entre les deux tôles métalliques 42a, 42b et donc la résistance électrique R de la cellule. Plus précisément, un point de soudure entraîne une augmentation locale de la conductivité de la plaque bipolaire et donc une diminution de la résistance de contact de celle-ci. Dans cet exemple, les tôles sont réalisées en un matériau métallique, les bossages étant de préférence réalisés par emboutissage. Comme l'illustre la figure 6b, les deux tôles 42a, 42b peuvent comporter localement un revêtement 45 au contact des deux tôles, dont le matériau et/ou l'épaisseur sont choisis en fonction de la modification de la résistance de contact désirée. Le matériau présente une conductivité et une épaisseur choisies pour assurer une modification locale de la résistance de contact $R_{BP}$ de la plaque bipolaire et donc de la résistance électrique R de la cellule. En particulier, la conductivité électrique du revêtement est différente de celle des tôles de la plaque bipolaire. A titre illustratif, le matériau peut être choisi parmi les matériaux listés dans le tableau 2 de la publication de Herman et al., Bipolar plates for PEM fuel cells: A review, International Journal of Hydrogen Energy, 30 (2005), 1297-1302. Le positionnement de la couche de revêtement entre les deux tôles présente notamment l'avantage d'éviter tout risque de mis en contact du matériau de revêtement avec les électrodes susceptible d'en altérer les propriétés électrochimiques. Dans cet exemple, les tôles peuvent être réalisées en un matériau autre que métallique, par exemple un matériau composite chargé en graphite. Les tôles sont alors des plaques dont les bossages sont réalisés de préférence par moulage.

Comme l'illustre la figure 6c, on réalise la plaque bipolaire en modifiant localement la distribution spatiale initiale de la résistance électrique R de la cellule par modification de la résistance de contact $R_{BP}$ entre les deux tôles. Sur la figure est représenté de manière schématique en vue de dessus un circuit cathodique de distribution d'air 51 d'une plaque bipolaire qui s'étend entre une entrée et une sortie, et dont les différentes zones rectangulaires grisées représentent des zones où la résistance de contact $R_{BP}$ a été localement modifiée. Dans les zones $Z_1$ et $Z_2$ où la température locale correspondant à une répartition de la résistance électrique initialement homogène est susceptible d'être supérieure à la température de consigne $T^c$, on diminue la densité des points de soudure par rapport à la densité initiale, de sorte que la résistance électrique R soit maximale et limite la production locale d'énergie électrique et donc thermique. Dans la zone $Z_3$ où la température locale est susceptible d'être inférieure à la température de consigne $T^c$, on augmente la densité des points de soudure par rapport à la densité initiale, de sorte que la résistance électrique R soit minimale et permette une production locale d'énergie électrique et donc thermique maximale. Ainsi, la cellule électrochimique munie d'une plaque bipolaire dont la résistance de contact $R_{BP}$ présente une distribution ainsi modifiée fournit en fonctionnement une température effective sensiblement égale à la température de consigne en tout point de la zone active, celle-ci étant avantageusement homogène.

De manière équivalente, les zones grisées localement sur la figure 6c peuvent illustrer des zones où un revêtement présentant une conductivité électrique élevée a été disposé. On modifie ainsi la résistance de contact $R_{Bp}$ de la plaque bipolaire pour ajuster la résistance électrique R de la cellule de manière à ce que la température effective de la cellule soit sensiblement identique à la température de consigne en tout point de la zone active.

Comme le montrent les figures 2 et 4, à l'issue de l'étape de réalisation de la cellule électrochimique pour que la résistance électrique R présente la distribution spatiale $R^f_{x,y}$ préalablement déterminée, une étape de mesure de la distribution spatiale de la température effective de la cellule en fonctionnement est effectuée, puis celle-ci est comparée à la température de consigne $T^C$. Les étapes 110, 120 ; 210, 220 peuvent être réitérées en modifiant les propriétés de la nouvelle cellule de référence et/ou en affinant la distribution spatiale de la température de consigne, notamment en ajustant les coefficients K' et $K^\varphi$. Les étapes suivantes du procédé de détermination de la distribution de la résistance électrique R puis de réalisation de la plaque bipolaire sont ensuite effectuées, puis est réalisée une nouvelle étape de comparaison entre la température effective de la cellule en fonctionnement et la température de consigne, jusqu'à ce qu'un paramètre de convergence indique que cet écart est inférieur à une valeur seuil prédéterminée.

Des modes de réalisation particuliers viennent d'être décrits. Différentes variantes et modifications apparaîtront à l'homme du métier.

Ainsi, le paramètre d'intérêt représentatif de la production d'énergie électrique d'une cellule électrochimique peut être plus particulièrement représentatif de la résistance de contact $Rc_{BP/GDL}$ entre la couche de diffusion de l'électrode et la plaque bipolaire adjacente.

La résistance de contact $Rc_{GDL/PB}$ de l'électrode avec la plaque bipolaire peut être ajustée en fonction de la distribution spatiale $\Delta T^e_{x,y}$, $Q^e_{x,y}$ d'une seconde grandeur thermique $\Delta T^e$, $Q^e$ selon que le procédé selon le premier mode de réalisation (figure 2) ou selon le second mode (figure 4) est utilisé.

Pour cela, un procédé de réalisation d'une cellule électrochimique comporte une étape dans laquelle on ajuste localement l'épaisseur d'au moins l'une des plaques bipolaires.

Plus précisément, on diminue l'épaisseur de la plaque bipolaire dans une zone Zi dans laquelle la température effective est supérieure à la température de consigne, de manière proportionnelle à la valeur locale de cet écart. Ainsi, cette diminution d'épaisseur de la plaque bipolaire conduit à un effort diminué sur la couche de diffusion, ce qui augmente la résistance de contact $Rc_{PB/GDL}$ et entraîne une diminution de la production locale d'énergie électrique et donc thermique. A l'inverse, on augmente l'épaisseur de la plaque bipolaire dans une autre zone Zi dans laquelle la température effective est inférieure à la température de consigne, de manière proportionnelle à la valeur locale de cet écart. Ainsi, cette augmentation d'épaisseur de la plaque bipolaire conduit à un effort augmenté sur la couche de diffusion, ce qui diminue la résistance de contact $Rc_{PB/GDL}$ et entraîne une augmentation de la production locale d'énergie électrique et donc thermique. Il est à noter que la variation de l'épaisseur de la plaque bipolaire entraîne également une variation de la section droite des canaux de distribution des espèces réactives, qui induit également une variation à la production d'énergie électrique et donc thermique qui se conjugue avec la variation de la résistance de contact.

De manière alternative ou complémentaire, on place au moins une plaque de serrage au contact ou à distance de la cellule électrochimique, cette plaque étant structurée de manière à assurer l'application d'un effort de serrage sur la cellule entraînant des contraintes mécaniques se traduisant par des variations locales de la résistance de contact $Rc_{PB/GDL}$. Il peut s'agir d'une ou de deux plaques de serrage placées de part et d'autre d'un empilement de cellules électrochimiques et/ou d'une plaque de serrage, ou insert, disposée entre deux cellules adjacentes de l'empilement. La plaque de serrage présente une épaisseur variable qui conduit à un effort variable sur la couche de diffusion, ce qui modifie la résistance de contact $Rc_{PB/GDL}$ et entraîne une variation de la production locale d'énergie électrique et donc thermique.

Ainsi, l'application d'un effort inhomogène sur la cellule électrochimique se traduisant par des inhomogénéités de la distribution spatiale de la résistance de contact $Rc_{PB/GDL}$ entre l'électrode et la plaque bipolaire revient à compenser les inhomogénéités de température de la cellule électrochimique de manière à ce que la température corresponde à la température de consigne.

En variante ou de manière complémentaire, le paramètre d'intérêt représentatif de la production d'énergie électrique d'une cellule électrochimique peut être la charge en catalyseur présent dans la couche active d'au moins l'une des électrodes, le catalyseur pouvant être par exemple du platine situé dans la couche active de la cathode. Par charge, ou taux de charge, on entend la masse surfacique.

La densité locale de courant électrique $I_{x,y}$ est en effet directement proportionnelle à la charge locale $C_{x,y}$ en catalyseur.

Ainsi, on détermine la distribution spatiale $C_{x,y}$ de la charge en catalyseur en fonction de la distribution spatiale $\Delta T^e_{x,y}$, $Q^e_{x,y}$ de la seconde grandeur thermique $\Delta T^e$ ; $Q^e$ selon que l'on applique le procédé de détermination selon le premier mode (figure 2) ou selon le second mode de réalisation (figure 4).

Un procédé de réalisation d'une cellule électrochimique comporte alors une étape de dépôt du catalyseur, par exemple à l'aide d'une encre catalytique sur la surface de la membrane ou sur la couche de diffusion. Cette encre catalytique peut être composée notamment du catalyseur supporté sur du carbone (carbone platiné), un solvant et un polymère conducteur protonique (ionomère), en général de même nature que l'électrolyte. Le dépôt peut être effectué par des méthodes d'impression telles que l'enduction, la pulvérisation, le jet d'encre, ou la sérigraphie. Il est alors possible d'effectuer plusieurs étapes de dépôt localisé de différentes encres catalytiques qui diffèrent entre elles par la charge en catalyseur.

Il est par ailleurs avantageux de préserver la quantité totale de catalyseur sur la zone active de manière à ne pas modifier la densité totale de courant électrique de la cellule en fonctionnement.

Ainsi, les variations en charge de catalyseur se traduisent par des inhomogénéités de la distribution spatiale de densité de courant et donc de flux de chaleur produite, qui compensent les inhomogénéités de température de la cellule électrochimique de manière à ce que la température corresponde à la température de consigne.

En variante ou de manière complémentaire, le paramètre d'intérêt représentatif de la production d'énergie électrique d'une cellule électrochimique peut être plus particulièrement représentatif de la perméabilité fluidique d'au moins l'une des électrodes de la cellule, et être par exemple la perméabilité k de la couche de diffusion de l'anode ou de la cathode. La perméabilité k illustre la capacité de la couche de permettre la diffusion des fluides en son sein.

La densité locale de courant électrique $I_{x,y}$ est en effet directement proportionnelle à la quantité d'espèce réactive ayant diffusée au travers de la couche de diffusion jusqu'à la couche active de l'électrode. Ainsi, une couche de diffusion ayant localement une perméabilité k quasiment nulle ne permet pas à l'espèce réactive de rejoindre la couche active, ce qui se traduit par une densité locale de courant électrique sensiblement nulle. Ainsi, on détermine la distribution spatiale de la perméabilité k de la couche de diffusion en fonction de la distribution spatiale $\Delta T_{x,y}^e$, $Q_{x,y}^e$ de la seconde grandeur thermique $\Delta T^e$ ; $Q^e$ selon que l'on applique le procédé de détermination selon le premier mode (figure 2) ou selon le second mode de réalisation (figure 4).

On réalise ensuite une électrode de la cellule électrochimique en modifiant localement la perméabilité k de la couche de diffusion de manière à former des inhomogénéités dans la distribution spatiale $k_{x,y}$ de la perméabilité k en vue de compenser les inhomogénéités de la température de la cellule vis-à-vis d'une température de consigne. A titre d'exemple, on diminue localement la perméabilité de la couche de diffusion dans des zones où la température effective de la cellule est susceptible d'être supérieure à la température de consigne. Ainsi, la quantité locale d'espèce réactive pouvant diffuser jusqu'à la couche active est diminuée, ce qui diminue la densité locale de courant et donc le flux local de chaleur produite. Ainsi, la température effective de la cellule correspond localement à la température de consigne.

Pour cela, on imprègne par exemple la couche de diffusion d'un produit de colmatage dans les zones Zi identifiées. Le produit de colmatage peut comprendre, à titre d'exemple, du $TiO_2$ ou de la silice colloïdale. La quantité de produit de colmatage imprégné localement dans la couche de diffusion peut ainsi modifier la porosité de celle-ci pour ainsi obtenir une perméabilité locale $k_{Zi}$ présentant la valeur désirée.

Ainsi, les variations de perméabilité de la couche de diffusion de l'électrode se traduisent par des inhomogénéités de la distribution spatiale de densité de courant et donc de flux de chaleur produite, qui compensent les inhomogénéités de température de la cellule électrochimique de manière à ce que la température corresponde à la température de consigne.

**Revendications**

1. Procédé de détermination d'une distribution spatiale $(R_{x,y}^f)$ d'un paramètre d'intérêt (R) représentatif de la production d'énergie électrique d'une cellule électrochimique, ladite cellule comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, comprenant les étapes suivantes :

   i) fourniture (110 ; 210) d'une cellule électrochimique, au sein de laquelle le paramètre d'intérêt (R) est réparti selon une distribution spatiale initiale $(R_{x,y}^i)$, pour laquelle la distribution spatiale d'une température au sein de la cellule électrochimique en fonctionnement présente au moins une valeur locale supérieure ou égale à une valeur locale maximale prédéterminée ;

   ii) définition (120; 220) d'une distribution spatiale $(T_{x,y}^c)$ d'une température de consigne (T$^c$) au sein de la cellule électrochimique en fonctionnement, telle que les valeurs locales de température sont inférieures à des valeurs locales maximales prédéterminées ;

   iii) mesure (130 ; 230) d'une distribution spatiale $(D_{x,y}^r)$ d'une première grandeur thermique représentative de l'évacuation locale de la chaleur (D$^r$) au sein de ladite cellule électrochimique en fonctionnement ;

   iv) estimation (140 ; 240) d'une distribution spatiale $(Q_{x,y}^e)$ d'une seconde grandeur thermique (Q$^e$) représentative de la production locale de chaleur ($Q^e$) au sein de ladite cellule électrochimique en fonctionnement, en fonction de ladite distribution spatiale $\left(T^c_{x,y}\right)$ de la température de consigne ($T^c$) et de ladite distribution spatiale mesurée $\left(D^r_{x,y}\right)$ de la première grandeur thermique ($D^r$), de sorte que la distribution spatiale de température de ladite cellule électrochimique en fonctionnement, dont la première grandeur thermique ($D^r$) présente ladite distribution spatiale mesurée $\left(D^r_{x,y}\right)$ et la seconde grandeur thermique ($Q^e$) présente ladite distribution spatiale estimée $\left(Q^e_{x,y}\right)$, soit sensiblement égale à celle $\left(T^c_{x,y}\right)$ de la température de consigne ($T^c$) ;

v) détermination (150 ; 250) d'une distribution spatiale $\left(R^f_{x,y}\right)$ du paramètre d'intérêt (R) en fonction de la distribution spatiale estimée $\left(Q^e_{x,y}\right)$ de la seconde grandeur thermique ($Q^e$),

dans lequel l'étape d'estimation d'une distribution spatiale de la seconde grandeur thermique comporte :

- une phase de réalisation d'un maillage d'un circuit de refroidissement d'au moins une plaque bipolaire de la cellule électrochimique dans lequel est destiné à s'écouler un fluide caloporteur;
- une phase de simulation numérique par ordinateur de la seconde grandeur thermique, sur ledit maillage, par résolution d'un modèle numérique discret exprimant la seconde grandeur thermique en fonction de la température locale et de la première grandeur thermique.

2. Procédé de détermination selon la revendication 1, dans lequel le paramètre d'intérêt est choisi parmi un paramètre représentatif de la résistance électrique (R) de la cellule électrochimique ; un paramètre représentatif d'une résistance de contact ($Rc_{BP/GDL}$) entre au moins l'une des électrodes et la plaque bipolaire adjacente ; une charge d'un matériau catalyseur ($C_{Pt}$) présent au moins dans l'une des électrodes; et un paramètre représentatif d'une perméabilité (k) d'au moins une électrode.

3. Procédé de détermination selon la revendication 1 ou 2, dans lequel les plaques bipolaires sont formées de deux tôles accolées l'une à l'autre, chaque tôle comportant des bossages formant au niveau d'une face dite externe un circuit de distribution d'une espèce réactive, les bossages des tôles formant ensemble, au niveau de faces dites internes opposées aux faces externes, un circuit de refroidissement comportant des canaux de refroidissement qui communiquent fluidiquement entre eux entre une entrée et une sortie du circuit de refroidissement.

4. Procédé de détermination selon l'une quelconque des revendications 1 à 3, dans lequel l'étape de détermination de la distribution spatiale du paramètre d'intérêt est en outre effectuée en fonction d'une valeur prédéterminée d'un paramètre représentatif d'une puissance électrique globale de la cellule électrochimique.

5. Procédé de détermination selon l'une quelconque des revendications 1 à 4, dans lequel la première grandeur thermique est le débit local effectif ($D^r$) mesuré d'un fluide caloporteur circulant dans un circuit de refroidissement d'une plaque bipolaire de la cellule, et la seconde grandeur thermique est le flux local de chaleur ($Q^e$) produite par la cellule en fonctionnement.

6. Procédé de détermination selon la revendication 5, dans lequel l'étape v) comporte :

a) une première sous-étape dans laquelle on estime la distribution spatiale de la densité d'un signal électrique ($I^e$) produit par la cellule en fonctionnement, à partir de la distribution spatiale estimée du flux de chaleur produite ($Q^e$), et
b) une deuxième sous-étape dans laquelle on détermine la distribution spatiale du paramètre d'intérêt (R) à partir de la densité locale du signal électrique ($I^e$).

7. Procédé de réalisation d'une plaque bipolaire de cellule électrochimique, comportant les étapes dans lesquelles :

i) on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, la cellule présentant une

résistance électrique (R) répartie spatialement selon une distribution initiale $(R^{i}_{x,y})$ ;

ii) on détermine, par le procédé (100 ; 200) selon l'une quelconque des revendications précédentes, une distribution spatiale $(R^{f}_{x,y})$ de la résistance électrique (R) ;

iii) on réalise (160 ; 260) ladite plaque bipolaire de sorte que la résistance électrique (R) présente la distribution spatiale $(R^{f}_{x,y})$ déterminée.

**8.** Procédé de réalisation d'une plaque bipolaire selon la revendication 7, ladite plaque bipolaire étant formée de deux tôles embouties assemblées l'une à l'autre par une pluralité de points de soudure répartis selon une distribution spatiale initiale, l'étape de réalisation de la plaque bipolaire comporte la modification de la distribution spatiale d'un paramètre représentatif d'une résistance de contact ($Rc_{PB}$) entre les deux tôles en fonction de la distribution spatiale $(R^{f}_{x,y})$ déterminée.

**9.** Procédé de réalisation d'une plaque bipolaire selon la revendication 8, dans lequel la modification de la distribution spatiale du paramètre représentatif de la résistance de contact ($Rc_{PB}$) comporte une modification de la répartition de points de soudure assurant l'assemblage des tôles l'une à l'autre en fonction de ladite distribution spatiale déterminée $(R^{f}_{x,y})$ de la résistance électrique (R).

**10.** Procédé de réalisation d'une plaque bipolaire selon la revendication 8 ou 9, dans lequel la modification de la distribution spatiale du paramètre représentatif de la résistance de contact ($Rc_{PB}$) comporte une disposition d'un revêtement présentant une conductivité électrique différente de celles des tôles dans des zones préalablement identifiées à partir de ladite distribution spatiale déterminée $(R^{f}_{x,y})$ de la résistance électrique (R).

**11.** Procédé de réalisation d'une cellule électrochimique comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, le procédé comportant les étapes suivantes :

- on considère une cellule électrochimique de référence présentant un paramètre d'intérêt (R) représentatif de la production d'énergie électrique de la cellule réparti selon une distribution spatiale initiale $(R^{i}_{x,y})$ ;
- on détermine, par le procédé de détermination selon l'une quelconque des revendications 1 à 6, une distribution spatiale $(R^{f}_{x,y})$ du paramètre d'intérêt (R) ;
- on réalise la cellule électrochimique sur la base de la cellule électrochimique de référence dans laquelle le paramètre d'intérêt (R) présente la distribution spatiale $(R^{f}_{x,y})$ déterminée.

**12.** Support d'enregistrement d'informations, comportant des instructions pour la mise en oeuvre du procédé de détermination selon l'une quelconque des revendications 1 à 6, ces instructions étant aptes à être exécutées par un processeur.

**Patentansprüche**

**1.** Verfahren zur Bestimmung einer räumlichen Verteilung ($R^{f}_{x,y}$) eines Parameters von Interesse (R), der für die Produktion von elektrischer Energie einer elektrochemischen Zelle repräsentativ ist, wobei die Zelle zwei voneinander durch einen Elektrolyten getrennte Elektroden umfasst, die zwischen zwei bipolaren Platten angeordnet sind, die geeignet sind, reaktive Gattungen zu den Elektroden zu führen und von der Zelle während des Betriebs erzeugte Wärme abzuleiten, umfassend die folgenden Schritte:

i) Bereitstellung (110; 210) einer elektrochemischen Zelle, in der der Parameter von Interesse (R) nach einer

anfänglichen räumlichen Verteilung ($R^i_{x,y}$) verteilt ist, bei der die räumliche Verteilung einer Temperatur innerhalb der elektrochemischen Zelle während des Betriebs mindestens einen lokalen Wert größer oder gleich einem vorbestimmten lokalen Maximalwert aufweist;

ii) Definition (120; 220) einer räumlichen Verteilung ($T^c_{x,y}$) einer Solltemperatur ($T^c$) innerhalb der elektrochemischen Zelle während des Betriebs, so dass die lokalen Temperaturwerte kleiner als vorbestimmte lokale Maximalwerte sind;

iii) Messung (130; 230) einer räumlichen Verteilung ($D^r_{x,y}$) einer ersten thermischen Größe, die für die lokale Ableitung der Wärme ($D^r$) innerhalb der elektrochemischen Zelle während des Betriebs repräsentativ ist;

iv) Schätzung (140; 240) einer räumlichen Verteilung ($Q^e_{x,y}$) einer zweiten thermischen Größe ($Q^e$), die für die lokale Wärmeproduktion ($Q^e$) innerhalb der elektrochemischen Zelle während des Betriebs repräsentativ ist, in Abhängigkeit von der räumlichen Verteilung ($T^c_{x,y}$) der Solltemperatur ($T^c$) und der gemessenen räumlichen Verteilung ($D^r_{x,y}$) der ersten thermischen Größe ($D^r$), so dass die räumliche Temperaturverteilung der elektrochemischen Zelle während des Betriebs, deren erste thermische Größe ($D^r$) die gemessene räumliche Verteilung ($D^r_{x,y}$) aufweist, und deren zweite thermische Größe ($Q^e$) die geschätzte räumliche Verteilung ($Q^e_{x,y}$) aufweist, im Wesentlichen gleich jener ($T^c_{x,y}$) der Solltemperatur ($T^c$) ist;

v) Bestimmung (150; 250) einer räumlichen Verteilung ($R^f_{x,y}$) des Parameters von Interesse ($R$) in Abhängigkeit von der geschätzten räumlichen Verteilung ($Q^e_{x,y}$) der zweiten thermischen Größe ($Q^e$),

wobei der Schritt der Schätzung einer räumlichen Verteilung der zweiten thermischen Größe umfasst:

- eine Phase der Herstellung eines Netzes einer Kühlschaltung mindestens einer bipolaren Platte der elektrochemischen Zelle, in der eine Wärmeträgerflüssigkeit abfließen soll;
- eine Phase der digitalen Simulation durch einen Computer der zweiten thermischen Größe auf dem Netz durch Auflösung eines diskreten digitalen Modells, das die zweite thermische Größe in Abhängigkeit von der lokalen Temperatur und der ersten thermischen Größe ausdrückt.

2. Bestimmungsverfahren nach Anspruch 1, bei dem der Parameter von Interesse unter einem für den elektrischen Widerstand ($R$) der elektrochemischen Zelle repräsentativen Parameter; einem für einen Kontaktwiderstand ($Rc_{BP/GDL}$) zwischen mindestens einer der Elektroden und der angrenzenden bipolaren Platte repräsentativen Parameter; einer Ladung eines Katalysatormaterials ($C_{Pt}$), das in mindestens einer der Elektroden vorhanden ist; und einem für eine Durchlässigkeit ($k$) mindestens einer Elektrode repräsentativen Parameter ausgewählt ist.

3. Bestimmungsverfahren nach Anspruch 1 oder 2, bei dem die bipolaren Platten von zwei aneinander haftenden Blechen gebildet sind, wobei jedes Blech Erhöhungen umfasst, die im Bereich einer so genannten Außenseite eine Verteilungsschaltung einer reaktiven Gattung bilden, wobei die Erhöhungen der Bleche gemeinsam im Bereich von so genannten Innenseiten, die den Außenseiten gegenüberliegen, eine Kühlschaltung bilden, umfassend Kühlkanäle, die miteinander zwischen einem Eingang und einem Ausgang der Kühlschaltung in Fluidverbindung stehen.

4. Bestimmungsverfahren nach einem der Ansprüche 1 bis 3, bei dem der Schritt der Bestimmung der räumlichen Verteilung des Parameters von Interesse ferner in Abhängigkeit von einem vorbestimmten Wert eines für eine globale elektrische Leistung der elektrochemischen Zelle repräsentativen Parameters erfolgt.

5. Bestimmungsverfahren nach einem der Ansprüche 1 bis 4, bei dem die erste thermische Größe die effektive gemessene lokale Durchflussmenge ($D^r$) einer Wärmeträgerflüssigkeit ist, die in einer Kühlschaltung einer bipolaren Platte der Zelle zirkuliert, und die zweite thermische Größe der lokale Wärmestrom ($Q^e$) ist, der von der Zelle während des Betriebs produziert wird.

6. Bestimmungsverfahren nach Anspruch 5, bei dem der Schritt v) umfasst:

a) einen ersten Unterschritt, bei dem die räumliche Verteilung der Dichte eines elektrischen Signals ($I^e$), das von der Zelle während des Betriebs erzeugt wird, auf Basis der geschätzten räumlichen Verteilung des produzierten Wärmestroms ($Q^e$) geschätzt wird, und
b) einen zweiten Unterschritt, bei dem die räumliche Verteilung des Parameters von Interesse ($R$) auf Basis der lokalen Dichte des elektrischen Signals ($I^e$) bestimmt wird.

7. Verfahren zur Herstellung einer bipolaren Platte einer elektrochemischen Zelle, umfassend die Schritte, bei denen:

i) eine elektrochemische Referenzzelle betrachtet wird, umfassend zwei voneinander durch einen Elektrolyten getrennte Elektroden, die zwischen zwei bipolaren Platten angeordnet sind, die geeignet sind, reaktive Gattungen zu den Elektroden zu führen und von der Zelle während des Betriebs erzeugte Wärme abzuleiten, wobei die Zelle einen elektrischen Widerstand (R) aufweist, der räumlich nach einer anfänglichen räumlichen Verteilung ($R^i_{x,y}$) verteilt ist;

ii) durch das Verfahren (100; 200) nach einem der vorhergehenden Ansprüche eine räumliche Verteilung ($R^f_{x,y}$) des elektrischen Widerstandes (R) bestimmt wird;

iii) die bipolare Platte so ausführt (160; 260), dass der elektrische Widerstand (R) die bestimmte räumliche Verteilung ($R^f_{x,y}$) aufweist.

8. Verfahren zur Herstellung einer bipolaren Platte nach Anspruch 7, wobei die bipolare Platte von zwei tiefgezogenen Blechen gebildet ist, die miteinander durch eine Vielzahl von Schweißpunkten, die nach einer anfänglichen räumlichen Verteilung verteilt sind, verbunden sind, wobei der Schritt der Herstellung der bipolaren Platte die Änderung der räumlichen Verteilung eines für einen Kontaktwiderstand ($Rc_{PB}$) zwischen den zwei Blechen repräsentativen Parameters in Abhängigkeit von der bestimmten räumlichen Verteilung ($R^f_{x,y}$) umfasst.

9. Verfahren zur Herstellung einer bipolaren Platte nach Anspruch 8, bei dem die Änderung der räumlichen Verteilung des für den Kontaktwiderstand ($Rc_{PB}$) repräsentativen Parameters eine Änderung der Verteilung von Schweißpunkten umfasst, die die Verbindung der Bleche miteinander in Abhängigkeit von der bestimmten räumlichen Verteilung ($R^f_{x,y}$) des elektrischen Widerstandes (R) gewährleistet.

10. Verfahren zur Herstellung einer bipolaren Platte nach Anspruch 8 oder 9, bei dem die Änderung der räumlichen Verteilung des für den Kontaktwiderstand ($Rc_{PB}$) repräsentativen Parameters eine Anordnung einer Verkleidung umfasst, die eine unterschiedliche elektrische Leitfähigkeit als jene der Bleche in den vorher identifizierten Zonen auf Basis der bestimmten räumlichen Verteilung ($R^f_{x,y}$) des elektrischen Widerstandes (R) aufweist.

11. Verfahren zur Herstellung einer elektrochemischen Zelle, umfassend zwei voneinander durch einen Elektrolyten getrennte Elektroden, die zwischen zwei bipolaren Platten angeordnet sind, die geeignet sind, reaktive Gattungen zu den Elektroden zu führen und von der Zelle während des Betriebs erzeugte Wärme abzuleiten, wobei das Verfahren die folgenden Schritte umfasst:

- eine elektrochemische Referenzzelle wird betrachtet, die einen Parameter von Interesse (R) aufweist, der für die Produktion von elektrischer Energie der Zelle nach einer anfänglichen räumlichen Verteilung ($R^i_{x,y}$) repräsentativ ist;
- durch das Bestimmungsverfahren nach einem der Ansprüche 1 bis 6 wird eine räumliche Verteilung ($R^f_{x,y}$) des Parameters von Interesse (R) bestimmt;
- die elektrochemische Zelle wird auf Basis der elektrochemischen Referenzzelle, in der der Parameter von Interesse (R) die bestimmte räumliche Verteilung ($R^f_{x,y}$) aufweist, hergestellt.

12. Aufzeichnungsträger von Informationen, umfassend Befehle für den Einsatz des Bestimmungsverfahrens nach einem der Ansprüche 1 bis 6, wobei diese Befehle geeignet sind, von einem Prozessor ausgeführt zu werden.

**Claims**

1. Method for determining a spatial distribution $\left(R^f_{xy}\right)$ of a parameter of interest (R) representative of the electrical power production of an electrochemical cell, said cell including two electrodes separated from one another by an electrolyte and placed between two bipolar plates suitable for bringing reactive species to the electrodes and for removing the heat produced by the cell in operation, comprising the following steps:

i) providing (110; 210) an electrochemical cell, within which the parameter of interest (R) is distributed with an initial spatial distribution $\left(R^i_{xy}\right)$ and for which the spatial distribution of a temperature within the electrochemical cell in operation has at least one local value higher than or equal to a preset maximum local value;

ii) defining (120; 220) a spatial distribution $\left(T^c_{xy}\right)$ of a set-point temperature ($T^c$) within the electrochemical cell in operation, said distribution being such that the local temperature values are lower than preset maximum local values;

iii) measuring (130; 230) a spatial distribution $(D_{xy}^r)$ of a first thermal quantity representative of the local removal of heat ($D^r$) within said electrochemical cell in operation;

iv) estimating (140; 240) a spatial distribution $(Q_{xy}^e)$ of a second thermal quantity ($Q^e$) representative of the local production of heat ($Q^e$) within said electrochemical cell in operation, depending on said spatial distribution $(T_{xy}^c)$ of the set-point temperature ($T^c$) and on said measured spatial distribution $(D_{xy}^r)$ of the first thermal quantity ($D^r$), so that the spatial distribution of the temperature of said electrochemical cell in operation, the first thermal quantity ($D^r$) of which cell having said measured spatial distribution $(D_{xy}^r)$ and the second thermal quantity ($Q^e$) of which cell having said estimated spatial distribution $(Q_{xy}^e)$, is substantially equal to that $(T_{xy}^c)$ of the set-point temperature ($T^c$); and

v) determining (150; 250) a spatial distribution $(R_{xy}^f)$ of the parameter of interest ($R$) depending on the estimated spatial distribution $(Q_{xy}^e)$ of the second thermal quantity ($Q^e$),

wherein the step of estimating a spatial distribution of the second thermal quantity includes:

- a phase of producing a mesh of a cooling circuit of at least one bipolar plate of the electrochemical cell, through which circuit a heat-transfer fluid is intended to flow; and
- a phase of simulating numerically by computer the second thermal quantity on said mesh, by solving a discrete numerical model expressing the second thermal quantity as a function of the local temperature and of the first thermal quantity.

2. Determining method according to Claim 1, wherein the parameter of interest is chosen from a parameter representative of the electrical resistance ($R$) of the electrochemical cell; a parameter representative of a contact resistance ($Rc_{BP/GDL}$) between at least one of the electrodes and the adjacent bipolar plate; a load of a catalyst ($C_{Pt}$) present at least in one of the electrodes; and a parameter representative of a permeability ($k$) of at least one electrode.

3. Determining method according to Claim 1 or 2, wherein the bipolar plates are formed from two sheets that are bonded to each other, each sheet including embossments forming, in what is called an external face, a circuit for distributing a reactive species, the embossments of the sheets together forming, in what are called internal faces that are opposite the external faces, a cooling circuit including cooling channels that communicate fluidically with one another between an inlet and an outlet of the cooling circuit.

4. Determining method according to any one of Claims 1 to 3, wherein the step of determining the spatial distribution of the parameter of interest is furthermore carried out depending on a preset value of a parameter representative of an overall electrical power of the electrochemical cell.

5. Determining method according to any one of Claims 1 to 4, wherein the first thermal quantity is the measured effective local flow rate ($D^r$) of a heat-transfer fluid flowing in a cooling circuit of a bipolar plate of the cell, and the second thermal quantity is the local heat flux ($Q^e$) produced by the cell in operation.

6. Determining method according to Claim 5, wherein step v) includes:

a) a first sub-step of estimating the spatial distribution of the density of an electrical signal ($I^e$) produced by the cell in operation, from the estimated spatial distribution of the produced heat flux ($Q^e$); and
b) a second sub-step of determining the spatial distribution of the parameter of interest ($R$), from the local density of the electrical signal ($I^e$).

7. Method for producing an electrochemical-cell bipolar plate, including steps of:

i) considering a reference electrochemical cell, said cell including two electrodes separated from each other by an electrolyte and placed between two bipolar plates suitable for bringing reactive species to the electrodes and for removing the heat produced by the cell in operation, the cell having an electrical resistance (R) that is spatially distributed with an initial distribution $(R_{xy}^i)$;

ii) determining a spatial distribution $(R_{xy}^f)$ of the electrical resistance (R), using the method (100; 200) according to any one of the preceding claims; and

iii) producing said bipolar plate (160; 260), in such a way that the electrical resistance (R) has the determined spatial distribution $(R_{xy}^f)$.

8. Method for producing a bipolar plate according to Claim 7, said bipolar plate being formed from two embossed sheets that are joined to each other by a plurality of spot welds distributed with an initial spatial distribution, the step of producing the bipolar plate including modifying the spatial distribution of a parameter representative of a contact resistance ($Rc_{PB}$) between the two sheets depending on the determined spatial distribution $(R_{xy}^f)$.

9. Method for producing a bipolar plate according to Claim 8, wherein the modification of the spatial distribution of the parameter representative of the contact resistance ($Rc_{PB}$) includes a modification of the distribution of the spot welds joining the sheets to each other depending on said determined spatial distribution $(R_{xy}^f)$ of the electrical resistance (R).

10. Method for producing a bipolar plate according to Claim 8 or 9, wherein the modification of the spatial distribution of the parameter representative of the contact resistance ($Rc_{PB}$) includes placing a coating having an electrical conductivity different from those of the sheets in zones identified beforehand from said determined spatial distribution $(R_{xy}^f)$ of the electrical resistance (R).

11. Method for producing an electrochemical cell including two electrodes separated from each other by an electrolyte and placed between two bipolar plates suitable for bringing reactive species to the electrodes and for removing the heat produced by the cell in operation, the method including the following steps of:

- considering a reference electrochemical cell having a parameter of interest (R) representative of the electrical power production of the cell and distributed with an initial spatial distribution $(R_{xy}^i)$;

- determining a spatial distribution $(R_{xy}^f)$ of the parameter of interest (R), using the determining method according to any one of Claims 1 to 6; and

- producing the electrochemical cell, on the basis of the reference electrochemical cell in which the parameter of interest (R) has the determined spatial distribution $(R_{xy}^f)$.

12. Data storage medium containing instructions for implementing the determining method according to any one of Claims 1 to 6, these instructions being executable by a processor.

**Fig.1a**

**Fig.1b**

$$Re^i_{x,y}$$ — 110

$$T^c_{x,y}$$ — 120

$$T^r_{x,y}$$ — 130

— 100

— 101

$$\Delta T^e_{x,y}$$ — 140

$$Re^f_{x,y}$$ — 150

— 160

**Fig.2**

**Fig.3**

**Fig.4**

$$T^c_{i,j+1}$$
$$D^r_{i,j+1}$$
$$Q^e_{i,j+1}$$

$$d^1_{i,j}$$

$$T^c_{i-1,j} \qquad d^2_{i,j} \quad T^c_{i,j} \qquad d^3_{i,j} \qquad T^c_{i+1,j}$$
$$D^r_{i-1,j} \qquad\qquad D^r_{i,j} \qquad\qquad\qquad D^r_{i+1,j}$$
$$Q^e_{i-1,j} \qquad\qquad Q^e_{i,j} \qquad\qquad\qquad Q^e_{i+1,j}$$

$$d^4_{i,j}$$

$$T^c_{i,j-1}$$
$$D^r_{i,j-1}$$
$$Q^e_{i,j-1}$$

y

x

**Fig.5**

**Fig.6a**

**Fig.6b**

**Fig.6c**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2976732

**Littérature non-brevet citée dans la description**

- **INOUE et al.** Numerical analysis of relative humidity distribution in polymer electrolyte fuel cell stock including cooling water. *J. Power Sources,* 2006, vol. 162, 81-93

- Bipolar plates for PEM fuel cells: A review,. **HERMAN et al.** International Journal of Hydrogen Energy. 2005, vol. 30, 1297-1302